# EUROPEAN PATENT APPLICATION

(11) **EP 4 518 506 A1**
(43) Date of publication of application: **05.03.2025**
(21) Application number: 22939861.5
(22) Date of filing: 18.11.2022
(51) Int. Cl.: H04W 72/12

(54) **SCHEDULING INFORMATION DETERMINING METHOD AND APPARATUS, AND DOWNLINK CONTROL INFORMATION SENDING METHOD AND APPARATUS**

(30) Priority: 29.04.2022 WO PCT/CN2022/090771
(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/133023
(87) International publication number: WO 2023/207046

(57) **Abstract**

The present disclosure relates to a scheduling information determining method and apparatus, and a downlink control information (DCI) sending method and apparatus. The scheduling information determining method comprises: receiving DCI sent by a network device and used for scheduling a plurality of cells; determining an association relationship between a plurality of information domains of the same type in the DCI and the plurality of cells; and determining scheduling information of each cell according to the value of each information domain and the association relationship. According to the present disclosure, an association relationship between a plurality of information domains of the same type and a plurality of cells may be determined; a cell corresponding to each information domain is determined according to the association relationship; then, scheduling information of the cell may be determined according to the value of the information domain corresponding to the cell; finally, the corresponding cell may be scheduled by means of the scheduling information. Therefore, on the basis of scheduling a plurality of cells by means of one DCI, scheduling information of each cell is accurately determined.

## Description

The present application is based on a Chinese patent application with application number PCT/CN2022/090771, filed on April 29, 2022. The present application requests the priority of the above Chinese patent application, the entire content of which is hereby incorporated by reference.

### TECHNICAL FIELD

The present disclosure relates to the field of communication technology, and in particular to a scheduling information determining method, a downlink control information transmitting method, a scheduling information determining apparatus, a downlink control information transmitting apparatus, a communication device, and a computer-readable storage medium.

### BACKGROUND

Based on the existing mechanism, the DCI (Downlink Control Information) of the current cell is only allowed to schedule data for one cell, such as to schedule PUSCH (Physical Uplink Shared Channel) and PDSCH (Physical Downlink Shared Channel).

With the development of communication technology and the gradual fragmentation of frequency resources, these dispersed spectrum resources are utilized through Cross-Carrier Scheduling (CCS) to achieve higher network throughput and better coverage. By scheduling multi-cell data corresponding to the dispersed spectrum resources through a single DCI, the payload overhead of the DCI can be effectively reduced and system capacity can be improved. However, there is currently no suitable solution proposed for the design of a single DCI that enables scheduling for multiple cells.

### SUMMARY

In view of this, the embodiments of the present disclosure propose a scheduling information determining method, a downlink control information transmitting method, a scheduling information determining apparatus, a downlink control information transmitting apparatus, a communication device, and a computer-readable storage medium to solve technical problems in related arts.

According to the first aspect of the embodiments of the present disclosure, a scheduling information determining method is proposed, performed by a terminal, including: receiving downlink control information (DCI) for scheduling a plurality of cells transmitted by a network device; determining an associating relationship between a plurality of information fields of a same type in the DCI and the plurality of cells; and determining scheduling information for each of the plurality of cells based on a value of each of the plurality of information fields and the associating relationship.

According to the second aspect of the embodiments of the present disclosure, a downlink control information transmitting method is proposed, performed by a network device. The method includes: determining an associating relationship between a plurality of information fields of a same type in downlink control information (DCI) used for scheduling a plurality of cells and a plurality of cells; generating DCI based on the associating relationship; and transmitting generated DCI to a terminal.

According to the third aspect of this disclosed embodiment, a scheduling information determining apparatus is proposed, applied to a terminal, including: a receiving module, configured to receive downlink control information (DCI) for scheduling a plurality of cells transmitted by a network device; and a processing module, configured to determine an associating relationship between a plurality of information fields of a same type in the DCI and the plurality of cells; and determine scheduling information for each of the plurality of cells based on a value of each of the plurality of information fields and the associating relationship.

According to the fourth aspect of the disclosed embodiment, a downlink control information transmitting apparatus is proposed, applied to a network device, including: a processing module, configured to determine an associating relationship between a plurality of information fields of a same type in downlink control information (DCI) used for scheduling a plurality of cells and a plurality of cells; and generate DCI based on the associating relationship; and a transmitting module, configured to transmit generated DCI to a terminal.

According to the fifth aspect of the embodiments of the present disclosure, a communication device is proposed, including: one or more processors; and one or more memories for storing a computer programs; where when the computer program is executed by the one or more processors, the scheduling information determining method described above is implemented.

According to the sixth aspect of the embodiments of the present disclosure, a communication device is proposed, including: one or more processors; and one or more memories for storing a computer programs; where when the computer program is executed by the one or more processors, the downlink control information transmitting method described above is implemented.

According to the seventh aspect of the embodiments of the present disclosure, a computer-readable storage medium is proposed for storing a computer program, where when the computer program is executed by one or more processors, the scheduling information determining method described above is implemented.

According to the eighth aspect of the embodiments of the present disclosure, a computer-readable storage medium is proposed for storing a computer program, where when the computer program is executed by one or more processors, the downlink control information transmitting method described above is implemented.

According to the embodiments of the present disclosure, the network device can transmit DCI to the terminal for scheduling multiple cells. Specifically, multiple information fields of the same type can be set in the DCI, and each information field can schedule one cell.

The terminal can determine the associating relationship between multiple information fields of the same type and multiple cells, and then determine the corresponding cell for each information field based on the associating relationship. Therefore, the scheduling information for the cell can be determined based on the value of the information field corresponding to the cell, and finally the corresponding cell can be scheduled through the scheduling information. Thus, based on multiple cells being scheduled through one DCI, the scheduling information for each cell is accurately determined.

### BRIEF DESCRIPTION OF DRAWINGS

In order to more clearly illustrate the technical solutions according to the embodiments of the present disclosure, drawings that need to be used in the description of the embodiments will be briefly introduced below. The drawings in the following description only relate to some embodiments of the present disclosure. For those skilled in the art, other drawings can also be obtained according to these drawings without creative effort.
FIG. 1A is a schematic flowchart of a scheduling information determining method according to an embodiment in the present disclosure.
FIG. 1B is a schematic diagram of an application scenario of a scheduling information determining method according to an embodiment in the present disclosure.
FIG. 2 is a schematic flowchart of a downlink control information transmitting method according to an embodiment in the present disclosure.
FIG. 3 is a schematic block diagram of a scheduling information determining apparatus according to an embodiment in the present disclosure.
FIG. 4 is a schematic block diagram of a downlink control information transmitting apparatus according to an embodiment in the present disclosure.
FIG. 5 is a schematic block diagram of a device for determining scheduling information according to an embodiment in the present disclosure.
FIG. 6 is a schematic block diagram of a device for transmitting downlink control information according to an embodiment in the present disclosure.

### DETAILED DESCRIPTION

The technical solutions in the embodiments of the present disclosure are clearly described below with reference to the accompanying drawings in the embodiments of the present disclosure. The embodiments described are merely some embodiments of the present disclosure, and not all embodiments. Other embodiments achieved by those skilled in the art according to the embodiments in the present disclosure without paying creative work shall all fall within the scope of protection of the present disclosure.

The term used in the embodiments of the present disclosure is for the purpose of describing particular examples only and is not intended to limit the embodiments of the present disclosure. As used in embodiments of the present disclosure and the appended claims, the singular forms "a", "an" and "the" are intended to include the plural forms as well, unless the context clearly indicates otherwise. It should further be understood that the term "and/or" as used herein refers to and includes any and all possible combinations of one or more of the associated listed items.

It shall be understood that, although the terms "first," "second," "third," and the like may be used herein to describe various information, the information should not be limited by these terms. These terms are only used to distinguish the same type of information from each other. For example, without departing from the scope of the present disclosure, first information may be referred as second information; and similarly, second information may also be referred as first information. Depending on the context, the word "if" as used herein can be interpreted as "at the time of", "when" or "in response to determining".

For the purpose of simplicity and ease of understanding, the terms used in the present disclosure to represent comparison are "greater than", "less than", "higher than" or "lower than". But for those skilled in the art, it can be understood that the term "greater than" also encompasses the meaning of "greater than or equal to", "less than" also encompasses the meaning of "less than or equal to", "higher than" encompasses the meaning of "higher than or equal to", and "lower than" also encompasses the meaning of "lower than or equal to".

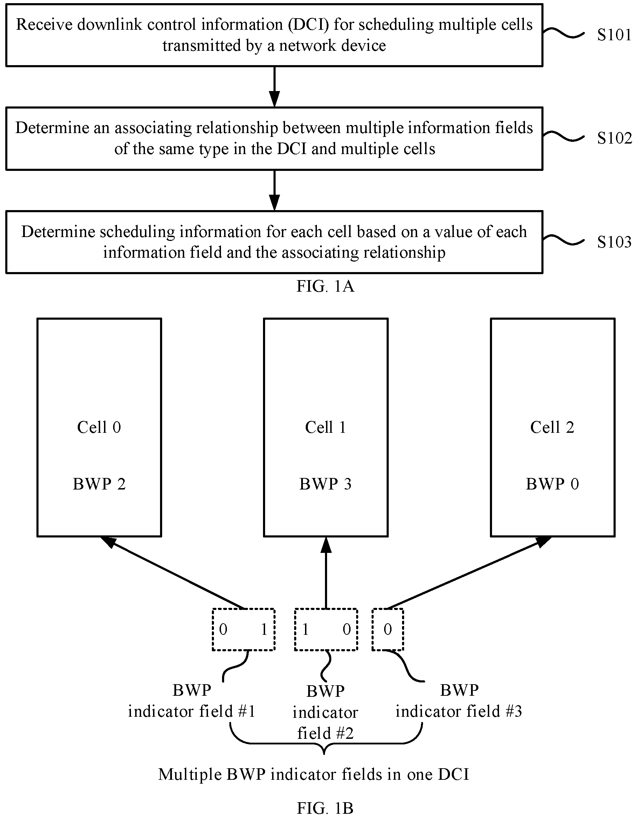

FIG. 1A is a schematic flowchart of a scheduling information determining method according to an embodiment in the present disclosure. The scheduling information determining method shown in the embodiments can be applied to a terminal. The terminal includes but is not limited to a communication device such as a mobile phone, a tablet, a wearable device, a sensor, or an Internet of Things (IoT) device. The terminal can communicate with a network device. The network device includes but not limited to a network device (such as a base station, a core network, etc.) in a communication system such as a 4G communication system, a 5G communication system, or a 6G communication system, etc.

As shown in FIG. 1A, the scheduling information determining method may include the following steps S101 to S103.

In step S101, downlink control information (DCI) for scheduling multiple cells transmitted by a network device is received.

In step S102, an associating relationship between multiple information fields of the same type in the DCI and multiple cells is determined.

In step S103, scheduling information for each cell is determined based on a value of each information field and the associating relationship.

In an embodiment, DCI may include various types of information fields, such as FDRA (Frequency Domain Resource Assignment) field, ZP CSI-RS trigger (Zero Power Channel Information Reference Signal trigger) field, and BandWidth Part Indicator field, etc.

DCI of an existing mechanism generally includes one information field for one type. Based on this type of information field, a cell can be scheduled. For example, an FDRA information field can schedule a frequency domain resource of a target cell.

The embodiments can be applied in scenarios where one DCI schedules multiple cells. In this embodiment, the network device can transmit DCI to the terminal for scheduling multiple cells. One possible design approach is as follows: for one or more types of information fields within the DCI, multiple information fields of the same type can be set in the DCI, and each information field can be used for scheduling one of the cells. The same type of information field corresponds to the same type of indicating information, for example, the FDRA can be used for indicating the frequency domain resources of different cells, for example, the BWP indicator can be used for indicating the BWP index configured for different cell, as described below.

This indicating manner can be called the separate manner. For example, a specific type of information field in a DCI can include multiple information fields. On the basis of an information field in a DCI for scheduling a single cell, corresponding bits can be extended on the specific type of information field according to the number of cells, thereby obtaining multiple information fields of the same type, where different information fields indicate messages to different cells. The number of bits occupied by multiple information fields of the same type in a DCI is equal to the sum of the bits occupied by the information field corresponding to each cell. The number of bits occupied by the above information field for each cell is the same as the number of bits occupied by the information field of the same type as the above information field in DCI for scheduling one cell in the existing mechanism.

FIG. 1B is a schematic diagram of an application scenario of a scheduling information determining method according to an embodiment in the present disclosure. As shown in FIG. 1B, taking the BWP indicator field as an example, in one DCI used for scheduling three cells (with cell IDs 0, 1, and 2), there are three BWP indicator fields (i.e., BWP indicator field #1, BWP indicator field #2, and BWP indicator field #3), where the three BWP indicator fields occupy 5 bits, such as a value of 01100.

Where the first and second bits (01) can be used as BWP indicator field #1 corresponding to cell 0, so BWP ID=2 for cell 0 can be determined based on the first and second bits (01). The third and fourth bits (10) can be used as BWP indicator field #2 corresponding to cell 1, so BWP ID=3 for cell 1 can be determined based on the third and fourth bits (10). The fifth bit (0) can be used as the BWP indicator field #3 corresponding to cell 0, so BWP ID=1 for cell 2 can be determined based on the fifth bit (0).

The number of bits occupied by the three BWP indicator fields is equal to the sum of the bits occupied by the three BWP fields for the cells. The number of bits occupied by the BWP field for a specific cell is determined based on the existing mechanism, that is, the number of bits occupied by the BWP field for a specific cell is determined based on the high-layer configured BWP quantity *n*_{BWP,RRC} of the specific cell.

For the specific type of information fields for scheduling multiple cells in DCI, if the separate manner is used for the specific type of information fields, the specific type of information fields can include multiple information fields. The corresponding indexes for the bits occupied by multiple information fields are: 1, ..., *x*_{*k*₀}, *x*_{*k*₀}, *+* 1, ..., *x*_{*k*₁}, *x*_{*k*₁} + 1, ..., and *x_{kₙ},* where index 1 corresponds to the first bit in the specific type of information fields in DCI, index 1, ..., and *x*_{*k*₀} are the bits for the first information field, used to indicate the scheduling information for the cell *k*₀, index *xk_{j₋₁}*, ..., and *x_{kⱼ}* are the bits for the j-th information field, used to indicate the scheduling information for the cell, and index *xk_{n₋₁}*, ..., and *x_{kₙ}* are the bits for the n-th information field, used to indicate the scheduling information for the cell kₙ, where n is equal to the number of cells., where *kⱼ* is the cell ID. For example, a predefined rule can stipulate that the j-th information field in n information fields is associated with the j-th cell in n cells, where the cell ID of the j-th cell can be *kⱼ.*

The terminal can determine the associating relationship between multiple information fields of the same type and multiple cells, and then determine the corresponding cell for each information field based on the associating relationship. Therefore, the scheduling information for the cell can be determined based on the value of the information field corresponding to the cell. Thus, based on multiple cells being scheduled through one DCI, the scheduling information for each cell is accurately determined.

Since multiple types of information fields can be set in DCI, multiple information fields can be set for any one or several types in the multiple types of information fields to achieve scheduling of multiple cells in a separate manner. The specific type or types for which multiple information fields are set can be determined based on a predefined rule or instruction of signaling. For example, for the FDRA field and BWP indicator field, signaling indicates that the FDRA field is indicated in the separate manner. Therefore, in DCI, multiple FDRA fields can be set for multiple cells. For example, a predefined rule can stipulate that both FDAR field and BWP field are indicated based on the separate manner, and then multiple FDRA fields and multiple BWP indicator fields can be set in DCI for multiple cells.

It should be noted that the number of multiple cells scheduled by DCI and/or the cell IDs corresponding to multiple cells, i.e., multiple cells, can be determined by the terminal based on the CIF (Cell Indicator Field) in DCI, can also be pre-agreed with the network device, or can also be determined based on a predefined rule (such as a protocol agreement), which is not limited in the present disclosure.

In an embodiment, the multiple cells in the associating relationship are cells in a cell set, where the cell set includes at least one of:
a cell set composed of cells that can be scheduled by the DCI; or
a cell set composed of cells with same configuration parameters.

In this case, the number of information fields of the same type in DCI used to schedule multiple cells is equal to the number of cells in the cell set, such that for certain type of information fields, the certain type of information fields can respectively implement the indication for the cells.

In an embodiment, multiple cells in the relationship may belong to a cell set, which may be a cell set composed of cells that can be scheduled by DCI that is used to schedule multiple cells.

For example, the DCI used for scheduling multiple cells can schedule 4 cells, Cell #1, Cell #2, Cell #3, and Cell #4, and the cell set can be {Cell #1, Cell #2, Cell #3, Cell #4}.

For example, the number of multiple information fields of the same type in DCI used for scheduling multiple cells is the same as the number of cells that can be scheduled, but the number of cells actually scheduled by DCI used for scheduling multiple cells is less than or equal to the number of cells that can be scheduled. So the terminal can ignore information fields for unscheduled cells in the multiple information fields of the same type; alternatively, the values of information fields for unscheduled cells in the multiple information fields of the same type can be set to a predefined value (such as zero padding), such that the terminal can determine, based on the predefined value, that the information field is not used to indicate scheduling information.

The number of multiple information fields is the same as the number of cells that can be scheduled, both being 4. The DCI used to schedule multiple cells actually schedules 3 cells, such as scheduling Cell #1, Cell #3, and Cell #4 mentioned above. Therefore, the terminal can ignore the information field (filed #2) corresponding to Cell #2 in the 4 information fields, or the network device can set the value of filed #2 to a predefined value, and the terminal can determine that filed #2 is not used to indicate scheduling information based on the value of filed #2.

In an embodiment, multiple cells in the relationship can belong to one cell set, where the cell set can be composed of cells with the same configuration parameters. The configuration parameters include but are not limited to set identity, cell identity, sequence number, and Carrier Indicator Field (CIF);

For example, taking four cells Cell #1, Cell #2, Cell #3, and Cell #4, and the configuration parameters including CIF as an example, the CIF configured for each of these four cells can be determined (e.g., based on radio resource control (RRC) signaling). For example, if the CIF configured for Cell #1 is 01, the CIF configured for Cell #2 is 01, the CIF configured for Cell #3 is 02, and the CIF configured for Cell #4 is 02, it can be determined that Cell #1 and Cell #2 have the same CIF, and Cell #3 and Cell #4 have the same CIF. Therefore, Cell #1 and Cell #2 are divided into one cell set {Cell #1, Cell #2} corresponding to the downlink control information for scheduling multiple cells, and Cell #3 and Cell #4 are divided into another cell set {Cell #3, Cell #4} corresponding to the downlink control information for scheduling multiple cells.

In an example, the method further includes:
determining the cell set based on a predefined rule and/or signaling transmitted by the network device.

The cell set can be indicated by the network device through signaling, where the signaling includes but is not limited to RRC signaling, DCI, or MAC CE, etc. The cell set can also be determined based on a predefined rule. For example, if the predefined rule stipulates that cells with the same configuration parameters belong to the same cell set, the configuration parameters of the cells can be determined, and cells with the same configuration parameters can be determined as belonging to the same cell set.

In an embodiment, a cell in the cell set includes at least one of:
scheduling cell; or
scheduled cell.

For example, a cell set can include a scheduled cell, which is a cell scheduled by DCI used for scheduling multiple cells. For example, the cell set can include a scheduling cell, which is a cell where the terminal receives DCI used for scheduling multiple cells. For example, a cell set can include a scheduling cell and a scheduled cell.

It should be noted that both the scheduling cell and the scheduled cell can belong to the cells that can be scheduled by DCI used for scheduling multiple cells.

In an embodiment, the number of the plurality of information fields in the associating relationship is equal to a maximum number of cells that the DCI is able to schedule.

In an embodiment, the multiple cells scheduled each time by the DCI used for scheduling multiple cells can be different. The terminal can determine the multiple cells scheduled each time by the DCI used for scheduling multiple cells based on the indication information transmitted by the network device or a predefined rule (such as a protocol agreement).

For example, the multiple cells scheduled each time by the DCI used for scheduling multiple cells are determined based on the indication information transmitted by the network device, the network device can transmit the corresponding relationship (which can be in the form of a table, and can be carried in RRC signaling and transmitted to the terminal) between the indication information and the multiple cells scheduled each time by the DCI used for scheduling multiple cells. When the terminal receives DCI for scheduling multiple cells, the terminal can determine the multiple cells scheduled by the DCI indicated by the indication information (such as carried in the DCI or in other signaling) transmitted by the network device in the corresponding relationship. The terminal can also determine the maximum number of cells that can be scheduled by the DCI based on the corresponding relationship, that is, the number of cells scheduled by the DCI when the DCI schedules the maximum number of cells indicated by the indication information in the corresponding relationship.

For example, the corresponding relationship includes: the indication information is 1, and multiple cells scheduled by DCI are Cell #1 and Cell #2; the indication information is 2, and multiple cells scheduled by DCI are Cell #3 and Cell #4; and the indication information is 3, and multiple cells scheduled by DCI are Cell #1, Cell #2, and Cell #4. So the terminal can determine that the maximum number of cells that DCI can schedule is 3, and thus can determine that the number of multiple information fields of the same type in DCI is also 3.

Subsequently, when the terminal receives DCI for scheduling multiple cells, the terminal can first determine the number of cells actually scheduled by DCI. If the number of cells actually scheduled by DCI is equal to the number of multiple information fields of the same type, the cells indicated by each information field can be determined based on the identities of cells actually scheduled by the DCI corresponding to multiple information fields from small to large (or from large to small).

For example, if the cells actually scheduled by DCI are Cell #1, Cell #2, and Cell #4, it can be determine that the first information field is for indicating Cell #1, the second information field is for indicating Cell #2, and the third information field is for indicating Cell #4.

If the number of cells actually scheduled by DCI is less than the number of multiple information fields of the same type, based on the identities of cells actually scheduled by the DCI corresponding to multiple information fields from small to large (or from large to small), the cell indicated by each information field can be determined, and a predefined value can be set for an information field that does not have a corresponding cell scheduled by DCI, such that the terminal can determine that the information field is not used to indicate a cell based on the predefined value. Alternatively, a reserved bit can be set for an information field that does not have a corresponding cell scheduled by DCI, such that the terminal can determine based on the reserved bit that the information field is not used for indicating a cell.

For example, based on identities of cells actually scheduled by DCI corresponding to multiple information fields from small to large, the cells actually scheduled by DCI are Cell #1 and Cell #2. If starting from the first information field of multiple information fields for corresponding, it can be determined that the last information field does not indicate a corresponding cell. Then, it can be determined that the first information field is used to indicate Cell #1, the second information field is used to indicate Cell #2, and the third information field is a predefined value. If the starting from the last information field of multiple information fields for corresponding, it can be determined that the first information field does not indicate a corresponding cell. Then, it can be determined that the third information field is used to indicate Cell #1, the second information field is used to indicate Cell #2, and the first information field is a predefined value.

For example, based on identities of cells actually scheduled by DCI corresponding to multiple information fields from large to small, the cells actually scheduled by DCI are Cell #1 and Cell #2. If starting from the first information field of multiple information fields for corresponding, it can be determined that the last information field does not indicate a corresponding cell. Then, it can be determined that the first information field is used to indicate Cell #2, the second information field is used to indicate Cell #1, and the third information field is a predefined value. If the starting from the last information field of multiple information fields for corresponding, it can be determined that the first information field does not indicate a corresponding cell. Then, it can be determined that the third information field is used to indicate Cell #2, the second information field is used to indicate Cell #1, and the first information field is a predefined value.

In an embodiment, determining the associating relationship between multiple information fields of the same type in the DCI and multiple cells includes determining the associating relationship according to a predefined rule.

In an embodiment, determining the associating relationship between multiple information fields of the same type in the DCI and multiple cells includes determining the associating relationship based on the indication from the network device.

The associating relationship between multiple information fields of the same type in DCI and multiple cells can be defined by the predefined rule (such as a protocol agreement), or be indicated by the network device, where the approach through which the network device indicate the associating relationship includes but is not limited to indicating through Radio Resource Control (RRC) signaling, indicating through DCI, or indicating through MAC CE (Media Access Control Control Element).

The following embodiments mainly provide illustrative explanations for the situation where the predefined rule stipulates the associating relationship.

In an embodiment, the multiple information fields include n information fields, and the multiple cells include n cells. The predefined rule stipulates that the j-th information field in the n information fields is associated with the j-th cell in the n cells, where 1 ≤ j ≤ n.

The multiple cells can include the cell where the terminal receives the DCI and other cells (except the cell where the terminal receives the DCI), or the scheduled cells can not include the cell where the terminal receives the DCI and only include other cells. In this embodiment, the predefined rule can stipulate the associating relationship between the cells and the information fields without distinguishing between the cell where the terminal receives the DCI and other cells. The associating relationship between information fields and the cell where the terminal receives the DCI and other cells can be stipulated according to the same rule.

Taking n cells as an example, for a certain type of information field, n information fields can be set to schedule the n cells, and the associating relationship can be that the j-th information field in n information fields is associated with the j-th cell in n cells.

Based on this, the terminal can determine that the scheduling information indicated by the value of the j-th information field is the scheduling information for the j-th cell, thereby the terminal can accurately determine the scheduling information for each cell based on multiple cells being scheduled through one DCI. The number of bits occupied by the j-th information field and the specific indication method are the same as the method for the single DCI scheduling single cell.

For example, for the first to n-th cells, taking the FDRA field and the separate indication manner as an example, n FDRA fields can be set in DCI, and the predefined rule can stipulate that the j-th information field in the n information fields is associated with the j-th cell in the n cells, where the cell ID of the j-th cell can be *kⱼ.* In this embodiment, the terminal can determine that the first FDRA field indicates the frequency domain scheduling information for the first cell (cell *k*₁), the second FDRA field indicates the frequency domain scheduling information for the second cell (cell *k*₂), ..., the j-th FDRA field indicates the frequency domain scheduling information for the j-th cell (cell *kⱼ*), ..., and the n-th FDRA field indicates the frequency domain scheduling information for the n-th cell (cell *kₙ*), such that the terminal can accurately acquire the frequency domain scheduling information for each cell indicated by DCI based on multiple cells being scheduled through one DCI.

The number of bits occupied by the j-th FDRA field is determined according to the mechanism in communication protocol 38.212 [2], i.e., based on the resource allocation type ('type 0', 'type 1', 'dynamic') indicated by the high-layer configuration signaling for the j-th cell, the bits occupied by the j-th FDRA field and the corresponding relationship between the value indicated by the FDRA field and the frequency domain resource are determined.

For example, for the first to n-th cells, taking the ZP CSI-RS trigger field and the separate indication manner as an example, n ZP CSI-RS trigger fields can be set in DCI, and the predefined rule can stipulate that the j-th information field in the n information fields is associated with the j-th cell in the n cells, where the cell ID of the j-th cell can be *kⱼ.* In this embodiment, the terminal can determine that the first ZP CSI-RS trigger field indicates the ZP CSI-RS trigger information for the first cell (cell *k*₁), the second ZP CSI-RS trigger field indicates the ZP CSI-RS trigger information for the second cell (cell *k*₂), ..., the j-th ZP CSI-RS trigger field indicates the ZP CSI-RS trigger information for the j-th cell (cell *kⱼ*), ..., and the n-th ZP CSI-RS trigger field indicates the ZP CSI-RS trigger information for the n-th cell (cell *kₙ*), such that the terminal can accurately acquire the ZP CSI-RS trigger information for each cell indicated by DCI based on multiple cells being scheduled through one DCI.

The number of bits occupied by the j-th ZP CSI-RS trigger field is determined according to the mechanism in communication protocol 38.212 [2], i.e., based on the ZP CSI-RS resource set number *n*_{ZP} of the high-layer configuration for the j-th cell, the number of bits occupied by the j-th ZP CSI-RS trigger field is determined.

For example, for the first to n-th cells, taking the BWP indicator field and the separate indication manner as an example, n BWP indicator fields can be set in DCI, and the predefined rule can stipulate that the j-th information field in the n information fields is associated with the j-th cell in the n cells, where the cell ID of the j-th cell can be *kⱼ.* In this embodiment, the terminal can determine that the first BWP indicator field indicates the BWP information for the first cell (cell *k*₁), the second BWP indicator field indicates the BWP information for the second cell (cell *k*₂), ..., the j-th BWP indicator field indicates the BWP information for the j-th cell (cell *kⱼ*), ..., and the n-th BWP indicator field indicates the BWP information for the n-th cell (cell *kₙ*), such that the terminal can accurately acquire the BWP information for each cell indicated by DCI based on multiple cells being scheduled through one DCI.

The number of bits occupied by the j-th BWP field is determined according to the mechanism in communication protocol 38.212 [2], that is, based on BWP number *n*_{BWP,RRC} of the high-layer configuration for the j-th cell, the number of bits occupied by the j-th BWP field is determined.

The order of multiple information fields can be determined from front to back according to the order of bits occupied by multiple information fields, that is, the bits occupied by the j-th information field is before the bits occupied by the (j+1)-th information field. How to determine the order of multiple cells will be explained in the subsequent embodiments.

It should be noted that for multiple information fields of the same type, the number of bits corresponding to each information field can be the same, different, or 0, which can be specifically determined according to the mechanism in communication protocol 38.212 [2], and will not be repeated herein.

Taking 4 information fields of the same type occupying 8 bits as an example, if the number of bits corresponding to each information field is different, it can be that the first information field corresponds to the first and second bits (i.e., bit index 1, ..., and *x*_{*k*₀} corresponding to 2 bits), the second information field corresponds to the third to fifth bits (i.e., bit index *x*_{*k*₀} +1, ..., and *x*_{*k*₁} corresponding to 3 bits), the third information field corresponds to the sixth and seventh bits (i.e., bit index *x*_{*k*₁} +1, ..., and *x*_{*k*₂} corresponding to 2 bits), and the fourth information field corresponds to the eighth bit (i.e., *x*_{*k*₂} +1, ..., and *x*_{*k*₃} corresponding to 1 bit). If the number of bits corresponding to each information field is the same, the first information field can correspond to the first and second bits, the second information field can correspond to the third and fourth bits, the third information field can correspond to the fifth and sixth bits, and the fourth information field can correspond to the seventh and eighth bits, that is, each information field can correspond to two bits (i.e., bit index *x*_{*k*ⱼ₋₁}, ..., and *x_{kⱼ}* corresponding to two bits).

The following embodiments illustrate how the order of multiple cells is determined, where the predefined rule stipulates the associating relationship between the information field and the cell where the terminal receives the DCI and other cells according to the same rules.

In an embodiment, the predefined rule stipulates that the identity of the j-th cell is less than the identity of the (j+1)-th cell, i.e., *kⱼ* is less than *k*_{*j*+1}; alternatively, the predefined rule stipulates that the identity of the j-th cell is greater than the identity of the (j+1)-th cell, i.e., *kⱼ* is greater than *k*_{*j+*1}*.*

Regarding the identity (such as Cell ID) of the cell, the terminal can determine the identity of the scheduled cell based on the RRC signaling transmitted by the network device, e.g., based on information elements (IE) such as ServcellIndex and/or SCellIndex in the RRC signaling. If the identity of the cell corresponds to PCI (Physical Cell Identity), the identity of the scheduled cell can be determined based on the information element PhysCellId in RRC signaling. Of course, the identity of the scheduled cell can also be determined based on other signaling. Alternatively, the identity of the scheduled cell can be determined in other ways, such as by a predefined rule.

The predefined rule can stipulate that the cells are ordered according to identities of the cells, for example, the cells can be ordered from small to large according to their identities. If the identity of the j-th cell is less than the identity of the (j+1)-th cell. Alternatively, can the cells can be ordered from large to small according to their identities, and then the identity of the j-th cell is greater than the identity of the (j+1)-th cell.

For example, taking four cells as an example, namely cell #1 with identity 1, cell #2 with identity 2, cell #3 with identity 3, and cell #4 with identity 4. If ordered from small to large according to the identities, *kⱼ* is less than *k*_{*j*+1}, and therefore it can be determined that the first cell is cell #1, the second cell is cell #2, the third cell is cell #3, and the fourth cell is cell #4. If ordered in from large to small according to the identities, *kⱼ* is greater than *k*_{*j+*1}, and therefore it can be determined that the first cell is cell #4, the second cell is cell #3, the third cell is cell #2, and the fourth cell is cell #1.

Based on this, the ordering of the cells can be accurately determined according to their identities, and it can be determined which specific cell is scheduled for the j-th information field.

In an embodiment, the predefined rule stipulates that the center frequency of the j-th cell is less than the center frequency of the (j+1)-th cell; alternatively, the predefined rule stipulates that the center frequency of the j-th cell is greater than the center frequency of the (j+1)-th cell.

The center frequency of the cell can be determined by the terminal based on the information transmitted by the network device, such as based on the Synchronization Signal Block (SSB) transmitted by the network device. Of course, the center frequency of the scheduled cell can also be determined in other ways, such as by a predefined rule.

The predefined rule can stipulate that the cells are ordered according to their center frequencies. For example, the cells can be ordered from small to large according to their center frequencies, such that the center frequency of the j-th cell is less than the center frequency of the (j+1)-th cell. Alternatively, the cells can be ordered from large to small according to their center frequencies, such that the center frequency of the j-th cell is greater than the center frequency of the (j+1)-th cell.

For example, taking four cells as an example, the center frequency of cell #1 is f1, the center frequency of cell #2 is f2, the center frequency of cell #3 is f3, and the center frequency of cell #4 is f4, where f1>f2>f3>f4. If the cells are ordered from small to large according to their center frequencies, the first cell is cell #4, the second cell is cell #3, the third cell is cell #2, and the fourth cell is cell #1. If the cells are ordered from large to small according to their center frequencies, the first cell is cell #1, the second cell is cell #2, the third cell is cell #3, and the fourth cell is cell #4.

Based on this, the ordering of the cells can be accurately determined according to their center frequencies, and it can be determined which specific cell is scheduled for the j-th information field.

In an embodiment, the predefined rule stipulates that the absolute radio frequency channel number (ARFCN), specifically NR-ARFCN, corresponding to the center frequency of the j-th cell is less than the ARFCN corresponding to the center frequency of the (j+1)-th cell; alternatively, the predefined rule stipulates that the ARFCN corresponding to the center frequency of the j-th cell is greater than the ARFCN corresponding to the center frequency of the (j+1)-th cell.

Regarding the ARFCN of the cell, the terminal can determine the ARFCN of the cell based on the center frequency of the cell or in other ways.

The predefined rule can stipulate that the cells are ordered according to their ARFCNs, for example, the cells can be ordered from small to large according to ARFCN, such that the ARFCN of the j-th cell is less than the ARFCN of the (j+1)-th cell, or can the cells can be ordered from large to small according to ARFCN, such that the ARFCN of the j-th cell is greater than the ARFCN of the (j+1)-th cell.

For example, taking four cells as an example, the ARFCN of cell #1 is ARFCN #1, the ARFCN of cell #2 is ARFCN #2, the ARFCN of cell #3 is ARFCN #3, and the ARFCN of cell #4 is ARFCN #4, where ARFCN #1 > ARFCN #2 > ARFCN #3 > ARFCN #4. If the cells are ordered from small to large according to ARFCNs, the first cell is cell #4, the second cell is cell #3, the third cell is cell #2, and the fourth cell is cell #1. If the cells are ordered from small to large according to ARFCNs, the first cell is cell #1, the second cell is cell #2, the third cell is cell #3, and the fourth cell is cell #4.

Based on this, the ordering of the cells can be accurately determined according to their ARFCNs, and it can be determined which specific cell is scheduled for the j-th information field.

In an embodiment, the multiple information fields include n information fields, and the multiple cells include the cell where the terminal receives the DCI and n-1 other cells. The predefined rule stipulates that the first information field in the n information fields is associated with the cell where the terminal receives the DCI, and the i-th information field in the second to n-th information fields is associated with the (i-1)-th other cell in the n-1 other cells, where 2 ≤ i ≤ n.

The multiple cells can include the cell where the terminal receives the DCI and other cells (except the cell where the terminal receives the DCI), or the scheduled cells can not include the cell where the terminal receives the DCI and only include other cells. In this embodiment, the predefined rule can stipulate the associating relationship between the cells and the information fields when distinguishing between the cell where the terminal receives the DCI and other cells. The associating relationships between information fields and the cell where the terminal receives the DCI and other cells can be stipulated according to different rules.

Taking n cells as an example, if the n cells include the cell where the terminal receives the DCI and n-1 other cells, For a certain type of information field, n information fields can be set to schedule the n cells. The associating relationship can be that the first information field in the n information fields is associated with the cell where the terminal receives the DCI, and the i-th information field in the second to the n-th information fields is associated with the (i-1)-th other cell in the n-1 other cells. That is, for the n-1 other cells, the associating relationship between cells and information fields is defined according to the same rules, and the cell where the terminal receives the DCI is defined to be associated with the first information field.

Based on this, the terminal can determine that the scheduling information indicated by the value of the first information field is the scheduling information for the cell where the terminal receives the DCI. From the second information field to the n-th information field, the scheduling information indicated by the value of the i-th information field is the scheduling information for the (i-1)-th other cell. Therefore, based on multiple cells being scheduled through one DCI, the scheduling information for each cell can be accurately determined. The number of bits occupied by the i-th information field and the specific indication method are the same as the method for the single DCI scheduling single cell.

For example, for the n cells from the first cell to the n-th cell, if the n cells include the cell where the terminal receives the DCI and n-1 other cells, taking the FDRA field and the separate indication manner as an example, n FDRA fields can be set in the DCI. The predefined rule can stipulate that the first FDRA field in the n FDRA fields is associated with the cell where the terminal receives the DCI, and the i-th information field in the n-1 FDRA fields from the second to n-th FDRA fields is associated with the (i-1)-th other cell. If the cell ID of the cell where the terminal receives the DCI is not between *k*₁ and *k*_{*n*-1}, then the cell ID of the (i-1)-th cell can be *k*_{*i*-1}.

In this embodiment, the terminal can determine that the first FDRA field indicates the frequency domain scheduling information for the cell where the terminal receives the DCI. In the n-1 FDRA fields from the second to n-th FDRA fields, the second FDRA field indicates the frequency domain scheduling information for the first other cell (cell *k*₁), ..., the i-th FDRA field indicates the frequency domain scheduling information for the (i-1)-th other cell (cell *k*_{*i*-1}), ..., and the n-th FDRA field indicates the frequency domain scheduling information for the (n-1)-th other cell (cell *k*_{*n*-1}). Based on multiple cells being scheduled through one DCI, the terminal can accurately acquire the frequency domain scheduling information for each cell indicated by the DCI.

The number of bits occupied by the i-th FDRA field is determined according to the mechanism in communication protocol 38.212 [2], i.e., based on the resource allocation type ('type 0', 'type 1', 'dynamic') indicated by the high-layer configuration signaling for the i-th cell, the bits occupied by the i-th FDRA field and the corresponding relationship between the value indicated by the FDRA field and the frequency domain resource are determined.

For example, for the n cells from the first cell to the n-th cell, if the n cells include the cell where the terminal receives the DCI and n-1 other cells, taking the ZP CSI-RS trigger field and the separate indication manner as an example, n ZP CSI-RS trigger fields can be set in the DCI. The predefined rule can stipulate that the first ZP CSI-RS trigger field in the n ZP CSI-RS trigger fields is associated with the cell where the terminal receives the DCI, and the i-th information field in the n-1 ZP CSI-RS trigger fields from the second to n-th ZP CSI-RS trigger fields is associated with the (i-1)-th other cell. If the cell ID of the cell where the terminal receives the DCI is not between *k*₁ and *k*_{*n*-1}, then the cell ID of the (i-1)-th cell can be *k*_{*i*-1}.

In this embodiment, the terminal can determine that the first ZP CSI-RS trigger field indicates the ZP CSI-RS trigger information for the cell where the terminal receives the DCI. In the n-1 ZP CSI-RS trigger fields from the second to n-th BWP indicator fields, the second ZP CSI-RS trigger field indicates the ZP CSI-RS trigger information for the first other cell (cell *k*₁), ..., the i-th ZP CSI-RS trigger field indicates the ZP CSI-RS trigger for the (i-1)-th other cell (cell *k*_{*i*-1}), ..., and the n-th ZP CSI-RS trigger field indicates the ZP CSI-RS trigger for the (n-1)-th other cell (cell *k*_{*n*-1}). Based on multiple cells being scheduled through one DCI, the terminal can accurately acquire the ZP CSI-RS trigger information for each cell indicated by the DCI.

The number of bits occupied by the i-th ZP CSI-RS trigger field is determined according to the mechanism in communication protocol 38.212 [2], i.e., based on the ZP CSI-RS resource set number n_{ZP} of the high-layer configuration for the i-th cell, the number of bits occupied by the i-th ZP CSI-RS trigger field is determined.

For example, for the n cells from the first cell to the n-th cell, if the n cells include the cell where the terminal receives the DCI and n-1 other cells, taking the BWP indicator field and the separate indication manner as an example, n BWP indicator fields can be set in the DCI. The predefined rule can stipulate that the first BWP indicator field in the n BWP indicator fields is associated with the cell where the terminal receives the DCI, and the i-th information field in the n-1 FDRA fields from the second to n-th BWP indicator fields is associated with the (i-1)-th other cell. If the cell ID of the cell where the terminal receives the DCI is not between *k*₁ and *k*_{*n*-1}, then the cell ID of the (i-1)-th cell can be *k*_{*i*-1}.

In this embodiment, the terminal can determine that the first BWP indicator field indicates the BWP information for the cell where the terminal receives the DCI. In the n-1 BWP indicator fields from the second to n-th BWP indicator fields, the second BWP indicator field indicates the BWP information for the first other cell (cell *k*₁), ..., the i-th BWP indicator field indicates the BWP information for the (i-1)-th other cell (cell *k*_{*i*-1}), ..., and the n-th BWP indicator field indicates the BWP information for the (n-1)-th other cell (cell *k*_{*n*-1}). Based on multiple cells being scheduled through one DCI, the terminal can accurately acquire the BWP information for each cell indicated by the DCI.

The number of bits occupied by the i-th BWP field is determined according to the mechanism in communication protocol 38.212 [2], that is, based on BWP number n_{BWP,RRC} of the high-layer configuration for the i-th cell, the number of bits occupied by the i-th BWP field is determined.

The order of multiple information fields can be determined from front to back according to the order of bits occupied by multiple information fields, that is, the bits occupied by the (i-1)-th information field is before the bits occupied by the i-th information field. How to determine the order of multiple cells will be explained in the subsequent embodiments.

The following embodiments illustrate how the order of multiple cells is determined, where the predefined rule stipulates the associating relationship between the information field and the cell where the terminal receives the DCI and other cells according to different rules.

In an embodiment, the predefined rule stipulates that the identity of the (i-1)-th other cell is less than the identity of the i-th other cell; alternatively, the predefined rule stipulates that the identity of the (i-1)-th other cell is greater than the identity of the i-th other cell.

Regarding the identity (such as Cell ID) of the cell, the terminal can determine the identity of the scheduled cell based on the RRC signaling transmitted by the network device, e.g., based on IEs such as ServcellIndex and/or SCellIndex in the RRC signaling. If the identity of the cell corresponds to PCI, the identity of the scheduled cell can be determined based on the information element PhysCellId in RRC signaling. Of course, the identity of the scheduled cell can also be determined based on other method, such as by predefined rules.

The predefined rule can stipulate that the cells are ordered according to their identities, for example, the cells can be ordered from small to large according to their identities. Then, the cell where the terminal receives the DCI is the first cell, and the identity of the (i-1)-th other cell is smaller than the identity of the i-th other cell. If the cell ID of the cell where the terminal receives the DCI is not between *k*₁ and *k*_{*n*-1}, *k*_{*i*-1} is less than *kᵢ*. Alternatively, if the cells are ordered from large to small according to their identities, the cell where the terminal receives the DCI is the first cell, and the identity of the (i-1)-th other cell is greater than the identity of the i-th other cell. If the cell ID of the cell where the terminal receives the DCI is not between *k*₁ and *k*_{*n*-1}, *k*_{*i*-1} is greater than *kᵢ*.

For example, taking four cells as examples, namely cell #1 with identity 1, cell #2 with identity 2, cell #3 with identity 3, and cell #4 with identity 4, where cell #3 is the cell where the terminal receives the DCI, If the cells are ordered from small to large according to the identities, the first cell is cell #3, and for other cells except cell #3, *k*_{*i*-1} is less than *kᵢ*, the second cell is cell #1, the third cell is cell #2, and the fourth cell is cell #4. If the cells are ordered from large to small according to the identities, the first cell is cell #3, and for other cells except cell #3, *k*_{*i*-1} is greater than *kᵢ*, the second cell is cell #4, the third cell is cell #2, and the fourth cell is cell #1.

Based on this, the ordering of the cells can be accurately determined according to their identities, and it can be determined which specific cell is scheduled for the i-th information field.

In an embodiment, the predefined rule stipulates that the center frequency of the (i-1)-th other cell is less than the center frequency of the i-th other cell; alternatively, the predefined rule stipulates that the center frequency of the (i-1)-th other cell is greater than the center frequency of the i-th other cell.

The center frequency of the cell can be determined by the terminal based on the information transmitted by the network device, such as based on the SSB transmitted by the network device. Of course, the center frequency of the cell can also be determined in other ways, such as by a predefined rule.

The predefined rule can stipulate that the cells are ordered according to their center frequencies. For example, the cells can be ordered from small to large according to their center frequencies. Therefore, the cell where the terminal receives the DCI is the first cell, and the center frequency of the (i-1)-th other cell is lower than the center frequency of the i-th other cell. Alternatively, if the cells are ordered from large to small according to their center frequencies, the cell where the terminal is located is the first cell, and the center frequency of the (i-1)-th other cell is greater than the center frequency of the i-th other cell.

For example, taking four cells as an example, the center frequency of cell #1 is f1, the center frequency of cell #2 is f2, the center frequency of cell #3 is f3, and the center frequency of cell #4 is f4, where f1>f2>f3>f4, and cell #3 is the cell where the terminal receives the DCI. If the cells are ordered from small to large according to their center frequencies, the first cell is cell #3, the second cell is cell #4, the third cell is cell #2, and the fourth cell is cell #1. If the cells are ordered from large to small according to their center frequencies, the first cell is cell #3, the second cell is cell #1, the third cell is cell #2, and the fourth cell is cell #4.

Based on this, the ordering of the cells can be accurately determined according to their center frequencies, and it can be determined which specific cell is scheduled for the i-th information field.

In an embodiment, the predefined rule stipulates that the absolute radio frequency channel number ARFCN corresponding to the center frequency of the (i-1)-th other cell is less than the ARFCN corresponding to the center frequency of the i-th other cell; and alternatively, the predefined rule stipulates that the ARFCN corresponding to the center frequency of the (i-1)-th other cell is greater than the ARFCN corresponding to the center frequency of the i-th other cell.

Regarding the ARFCN of the cell, the terminal can determine the ARFCN of the cell based on the center frequency of the cell or in other ways.

The predefined rule can stipulate that the cells are ordered according to their ARFCNs. For example, the cells can be ordered from small to large according to their ARFCNs. Therefore, the cell where the terminal receives the DCI is the first cell, and the ARFCN of the (i-1)-th other cell is lower than the ARFCN of the i-th other cell. Alternatively, if the cells are ordered from large to small according to their ARFCNs, the cell where the terminal is located is the first cell, and the ARFCN of the (i-1)-th other cell is greater than the ARFCN of the i-th other cell.

For example, taking four cells as an example, the ARFCN of cell #1 is ARFCN #1, the ARFCN of cell #2 is ARFCN #2, the ARFCN of cell #3 is ARFCN #3, and the ARFCN of cell #4 is ARFCN #4, where ARFCN #1 > ARFCN #2 > ARFCN #3 > ARFCN #4, and cell #3 is the cell where the terminal receives the DCI. If the cells are ordered from small to large according to ARFCNs, the first cell is cell #3, the second cell is cell #4, the third cell is cell #2, and the fourth cell is cell #1. If the cells are ordered from small to large according to ARFCNs, the first cell is cell #3, the second cell is cell #1, the third cell is cell #2, and the fourth cell is cell #4.

Based on this, the ordering of the cells can be accurately determined according to their ARFCNs, and it can be determined which specific cell is scheduled for the i-th information field.

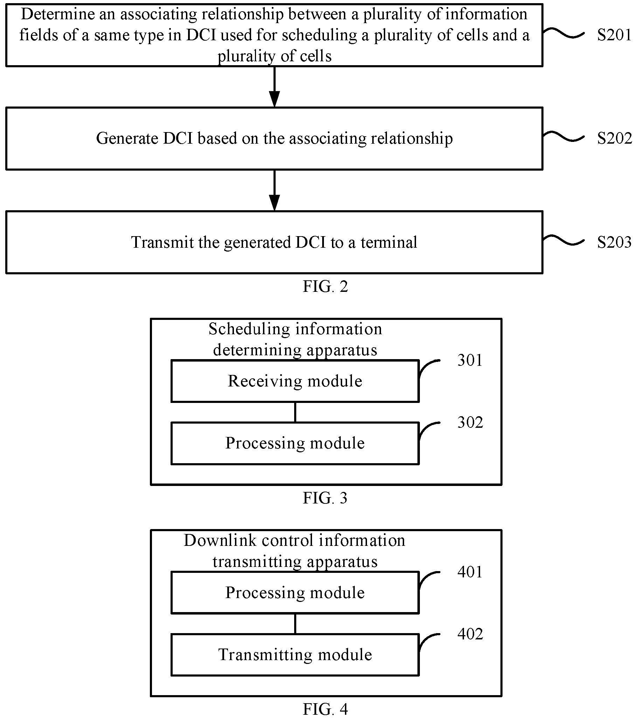

FIG. 2 is a schematic flowchart of a downlink control information transmitting method according to an embodiment in the present disclosure. The downlink control information transmitting method shown in the embodiments can be performed by a network device, where the network device can communicate with a terminal. The network device include but is not limited to a base station in a communication system such as a 4G base station, a 5G base station, or a 6G base station, etc. The terminal includes but is not limited to a communication device such as a mobile phone, a tablet, a wearable device, a sensor, or an Internet of Things (IoT) device.

As shown in FIG. 2, the downlink control information transmitting method may include the following steps S201 to S203.

In step S201, an associating relationship between a plurality of information fields of a same type in downlink control information (DCI) used for scheduling a plurality of cells and a plurality of cells is determined.

In step S202, DCI is generated based on the associating relationship.

In step S203, the generated DCI is transmitted to a terminal.

In an embodiment, the DCI may include various types of information fields, such as FDRA field, ZP CSI-RS trigger field, and bandwidth part indicator field, etc.

Existing DCI generally includes one information field for one type. Based on this type of information field, a cell can be scheduled. For example, an FDRA information field can schedule a frequency domain resource of a cell.

The embodiments can be applied in scenarios where one DCI schedules multiple cells. In this embodiment, the network device can determine the associating relationship between multiple information fields of the same type and multiple cells, and then set the information field for each cell based on the associating relationship, and generate DCI and transmit the DCI to the terminal to achieve scheduling of multiple cells. The same type of information field corresponds to the same type of indicating information, for example, the FDRA can be used for indicating the frequency domain resources of different cells, for example, the BWP indicator can be used for indicating the BWP index configured for different cell, as described below.

This indicating manner can be called the separate indication. For example, a specific type of information field in a DCI can include multiple information fields. On the basis of an information field in a DCI for scheduling a single cell, corresponding bits can be extended on the specific type of information field according to the number of cells, thereby obtaining multiple information fields of the same type, where different information fields indicate messages to different cells. The number of bits occupied by multiple information fields of the same type in a DCI is equal to the sum of the bits occupied by the information field corresponding to each cell. The number of bits occupied by the above information field for each cell is the same as the number of bits occupied by the information field of the same type as the above information field in DCI for scheduling one cell in the existing mechanism.

As shown in FIG. 1B, taking the BWP indicator field as an example, in one DCI used for scheduling three cells (with cell IDs 0, 1, and 2), there are three BWP indicator fields, where the three BWP indicator fields occupy 5 bits, such as a value of 01100.

Where the first and second bits (01) correspond to cell 0, so BWP ID=2 for cell 0 can be determined based on the first and second bits (01). The third and fourth bits (10) correspond to cell 1, so BWP ID=3 for cell 1 can be determined based on the third and fourth bits (10). The fifth bit (0) corresponds to cell 0, so BWP ID=1 for cell 2 can be determined based on the fifth bit (0).

The number of bits occupied by the three BWP indicator fields is equal to the sum of the bits occupied by the three BWP fields for the cells. The number of bits occupied by the BWP field for a specific cell is determined based on the existing mechanism, that is, the number of bits occupied by the BWP field for a specific cell is determined based on the high-layer configured BWP quantity *n*_{BWP,RRC} of the specific cell.

For the specific type of information fields for scheduling multiple cells in DCI, if the separate manner is used for the specific type of information fields, the specific type of information fields can include multiple information fields. The corresponding indexes for the bits occupied by multiple information fields are: 1, ..., *x*_{*k*₀}, *x*_{*k*₀} +1, ..., *x*_{*k*₁}, *x*_{*k*₁} *+* 1, ..., and *x_{kₙ},* where index 1 corresponds to the first bit in the specific type of information fields in DCI, index 1, ..., and *x*_{*k*₀} are the bits for the first information field, used to indicate the scheduling information for the cell *k*₀, index *x*_{kᵢ₋₁}, ..., and *x_{kᵢ}* are the bits for the i-th information field, used to indicate the scheduling information for the cell kᵢ, and index *x*_{*kn*₋₁}, ..., and *x_{kₙ}* are the bits for the n-th information field, used to indicate the scheduling information for the cell kₙ, where n is equal to the number of cells., where *kⱼ* is the cell ID. For example, a predefined rule can stipulate that the j-th information field in n information fields is associated with the j-th cell in n cells, where the cell ID of the j-th cell can be *kⱼ.*

Correspondingly, the terminal can determine the associating relationship between multiple information fields of the same type and multiple cells, and then determine the corresponding cell for each information field based on the associating relationship. Therefore, the scheduling information for the cell can be determined based on the value of the information field corresponding to the cell, and finally the corresponding cell can be scheduled through the scheduling information. Thus, based on multiple cells being scheduled through one DCI, the scheduling information for each cell is accurately determined.

Since multiple types of information fields can be set in DCI, multiple information fields can be set for any one or several types in the multiple types of information fields to achieve scheduling of multiple cells in a separate manner. The specific type or types for which multiple information fields are set can be determined based on a predefined rule or instruction of signaling. For example, for the FDRA field and BWP indicator field, signaling indicates that the FDRA field is indicated in the separate manner. Therefore, in DCI, multiple FDRA fields can be set for multiple cells. For example, a predefined rule can stipulate that both FDRA field and BWP field are indicated based on the separate manner, and then multiple FDRA fields and multiple BWP indicator fields can be set in DCI for multiple cells.

It should be noted that the number of multiple cells scheduled by DCI and/or the cell IDs corresponding to multiple cells, i.e., multiple cells, can be determined by the terminal based on the CIF in DCI, pre-agreed with the network device, or determined based on a predefined rule (such as a protocol agreement), which is not limited in the present disclosure.

In an embodiment, the multiple cells in the associating relationship are cells in a cell set, where the cell set includes at least one of:
a cell set composed of cells that can be scheduled by the DCI; or
a cell set composed of cells with same configuration parameters.

In this case, the number of information fields of the same type in DCI used to schedule multiple cells is equal to the number of cells in the cell set, such that for certain type of information fields can respectively implement the indication for the cells.

In an embodiment, multiple cells in the relationship may belong to a cell set, which may be a cell set composed of cells that can be scheduled by DCI that is used to schedule multiple cells.

For example, the DCI used for scheduling multiple cells can schedule 4 cells, Cell #1, Cell #2, Cell #3, and Cell #4, and the cell set can be {Cell #1, Cell #2, Cell #3, Cell #4}.

For example, the number of multiple information fields of the same type in DCI used for scheduling multiple cells is the same as the number of cells that can be scheduled, but the number of cells actually scheduled by DCI used for scheduling multiple cells is less than or equal to the number of cells that can be scheduled. So the terminal can ignore information fields for unscheduled cells in the multiple information fields of the same type; alternatively, the values of information fields for unscheduled cells in the multiple information fields of the same type can be set to predefined values (such as zero padding), such that the terminal can determine, based on the predefined value, that the information field is not used to indicate scheduling information.

The number of multiple information fields is the same as the number of cells that can be scheduled, both being 4. The DCI used to schedule multiple cells actually schedules 3 cells, such as scheduling Cell #1, Cell #3, and Cell #4 mentioned above. Therefore, the terminal can ignore the information field (filed #2) corresponding to Cell #2 in the 4 information fields, or the network device can set the value of filed #2 to a predefined value, and the terminal can determine that filed #2 is not used to indicate scheduling information based on the value of filed #2.

In an embodiment, multiple cells in the relationship can belong to one cell set, where the cell set can be composed of cells with the same configuration parameters. The configuration parameters include but are not limited to set identity, cell identity, sequence number, and Carrier Indicator Field (CIF);

For example, taking four cells Cell #1, Cell #2, Cell #3, and Cell #4, and the configuration parameters including CIF as an example, the CIF configured for each of these four cells can be determined (e.g., based on radio resource control (RRC) signaling). For example, if the CIF configured for Cell #1 is 01, the CIF configured for Cell #2 is 01, the CIF configured for Cell #3 is 02, and the CIF configured for Cell #4 is 02, it can be determined that Cell #1 and Cell #2 have the same CIF, and Cell #3 and Cell #4 have the same CIF. Therefore, Cell #1 and Cell #2 are divided into one cell set {Cell #1, Cell #2} corresponding to the downlink control information for scheduling multiple cells, and Cell #3 and Cell #4 are divided into another cell set {Cell #3, Cell #4} corresponding to the downlink control information for scheduling multiple cells.

In an example, the method further includes:
transmitting signaling to the terminal to indicate the cell set, or determining the cell set according to a predefined rule.

The cell set can be determined by the network device and indicated by the network device to the terminal through signaling, where the signaling includes but is not limited to RRC signaling, DCI, or MAC CE, etc. The cell set can also be determined based on a predefined rule. For example, if the predefined rule stipulates that cells with the same configuration parameters belong to the same cell set, the configuration parameters of the cells can be determined, and cells with the same configuration parameters can be determined as belonging to the same cell set.

In an embodiment, a cell in the cell set includes at least one of:
scheduling cell; or
scheduled cell.

For example, a cell set can include a scheduled cell, which is a cell scheduled by DCI used for scheduling multiple cells. For example, the cell set can include a scheduling cell, which is a cell where the terminal receives DCI used for scheduling multiple cells. For example, a cell set can include a scheduling cell and a scheduled cell.

It should be noted that both the scheduling cell and the scheduled cell can belong to the cells that can be scheduled by DCI used for scheduling multiple cells.

In an embodiment, the number of the plurality of information fields in the associating relationship is equal to a maximum number of cells that the DCI is able to schedule.

In an embodiment, the multiple cells scheduled each time by the DCI used for scheduling multiple cells can be different. The terminal can determine the multiple cells scheduled each time by the DCI used for scheduling multiple cells based on the indication information transmitted by the network device or a predefined rule (such as a protocol agreement).

For example, the multiple cells scheduled each time by the DCI used for scheduling multiple cells are determined based on the indication information transmitted by the network device, the network device can transmit the corresponding relationship (which can be in the form of a table, and can be carried in RRC signaling and transmitted to the terminal) between the indication information and the multiple cells scheduled each time by the DCI used for scheduling multiple cells. When the terminal receives DCI for scheduling multiple cells, the terminal can determine the multiple cells scheduled by the DCI indicated by the indication information (such as carried in the DCI or in other signaling) transmitted by the network device in the corresponding relationship. The terminal can also determine the maximum number of cells that can be scheduled by the DCI based on the corresponding relationship, that is, the number of cells scheduled by the DCI when the DCI schedules the maximum number of cells indicated by the indication information in the corresponding relationship.

For example, the corresponding relationship includes: the indication information is 1, and multiple cells scheduled by DCI are Cell #1 and Cell #2; the indication information is 2, and multiple cells scheduled by DCI are Cell #3 and Cell #4; and the indication information is 3, and multiple cells scheduled by DCI are Cell #1, Cell #2, and Cell #4. So the terminal can determine that the maximum number of cells that DCI can schedule is 3, and thus can determine that the number of multiple information fields of the same type in DCI is also 3.

Subsequently, when the terminal receives DCI for scheduling multiple cells, the terminal can first determine the number of cells actually scheduled by DCI. If the number of cells actually scheduled by DCI is equal to the number of multiple information fields of the same type, the cells indicated by each information field can be determined based on the identities of cells actually scheduled by the DCI corresponding to multiple information fields from small to large (or from large to small).

For example, if the cells actually scheduled by DCI are Cell #1, Cell #2, and Cell #4, it can be determine that the first information field is for indicating Cell #1, the second information field is for indicating Cell #2, and the third information field is for indicating Cell #4.

If the number of cells actually scheduled by DCI is less than the number of multiple information fields of the same type, based on the identities of cells actually scheduled by the DCI corresponding to multiple information fields from small to large (or from large to small), the cell indicated by each information field can be determined, and a predefined value can be set for an information field that does not have a corresponding cell scheduled by DCI, such that the terminal can determine that the information field is not used to indicate a cell based on the predefined value. Alternatively, a reserved bit can be set for an information field that does not have a corresponding cell scheduled by DCI, such that the terminal can determine based on the reserved bit that the information field is not used for indicating a cell.

For example, based on identities of cells actually scheduled by DCI corresponding to multiple information fields from small to large, the cells actually scheduled by DCI are Cell #1 and Cell #2. If starting from the first information field of multiple information fields for corresponding, it can be determined that the last information field does not indicate a corresponding cell. Then, it can be determined that the first information field is used to indicate Cell #1, the second information field is used to indicate Cell #2, and the third information field is a predefined value. If the starting from the last information field of multiple information fields for corresponding, it can be determined that the first information field does not indicate a corresponding cell. Then, it can be determined that the third information field is used to indicate Cell #1, the second information field is used to indicate Cell #2, and the first information field is a predefined value.

For example, based on identities of cells actually scheduled by DCI corresponding to multiple information fields from large to small, the cells actually scheduled by DCI are Cell #1 and Cell #2. If starting from the first information field of multiple information fields for corresponding, it can be determined that the last information field does not indicate a corresponding cell. Then, it can be determined that the first information field is used to indicate Cell #2, the second information field is used to indicate Cell #1, and the third information field is a predefined value. If the starting from the last information field of multiple information fields for corresponding, it can be determined that the first information field does not indicate a corresponding cell. Then, it can be determined that the third information field is used to indicate Cell #2, the second information field is used to indicate Cell #1, and the first information field is a predefined value.

In an embodiment, determining the associating relationship between multiple information fields of the same type in the downlink control information (DCI) used for scheduling multiple cells and multiple cells includes determining the associating relationship according to the predefined rule.

In an embodiment, determining the associating relationship between multiple information fields of the same type in the downlink control information (DCI) used for scheduling multiple cells and multiple cells includes: determining the associating relationship based on the implementation of the network device, and the method further includes: indicating the associating relationship to the terminal.

The associating relationship between multiple information fields of the same type in DCI and multiple cells can be defined by the predefined rule, such as a protocol agreement. The associating relationship can also be determined by the network device as needed and then indicated by the network device to the terminal, where the way in which the network device indicates the associating relationship includes but is not limited to indicating through RRC signaling, indicating through DCI, or indicating through MAC CE.

The following embodiments mainly provide illustrative explanations for the situation where the predefined rule stipulates the associating relationship.

In an embodiment, the multiple information fields include n information fields, and the multiple cells include n cells. The predefined rule stipulates that the j-th information field in the n information fields is associated with the j-th cell in the n cells, where 1 ≤ j ≤ n.

The multiple cells can include the cell where the terminal receives the DCI and other cells (except the cell where the terminal receives the DCI), or the scheduled cells can not include the cell where the terminal receives the DCI and only include other cells. In this embodiment, the predefined rule can stipulate the associating relationship between the cells and the information fields without distinguishing between the cell where the terminal receives the DCI and other cells. The associating relationship between information fields and the cell where the terminal receives the DCI and other cells can be stipulated according to the same rule.

Taking n cells as an example, for a certain type of information field, n information fields can be set to schedule the n cells, and the associating relationship can be that the j-th information field in n information fields is associated with the j-th cell in n cells.

Based on this, the terminal can determine that the scheduling information indicated by the value of the j-th information field is the scheduling information for the j-th cell, thereby the terminal can accurately determine the scheduling information for each cell based on multiple cells being scheduled through one DCI. The number of bits occupied by the j-th information field and the specific indication method are the same as the method for the single DCI scheduling single cell.

For example, for the first to n-th cells, taking the FDRA field and the separate indication manner as an example, n FDRA fields can be set in DCI, and the predefined rule can stipulate that the j-th information field in the n information fields is associated with the j-th cell in the n cells, where the cell ID of the j-th cell can be *kⱼ.* In this embodiment, the terminal can determine that the first FDRA field indicates the frequency domain scheduling information for the first cell (cell *k*₁), the second FDRA field indicates the frequency domain scheduling information for the second cell (cell *k*₂), ..., the j-th FDRA field indicates the frequency domain scheduling information for the j-th cell (cell *kⱼ*), ..., and the n-th FDRA field indicates the frequency domain scheduling information for the n-th cell (cell *kₙ*). Based on multiple cells being scheduled through one DCI, the network device can accurately determine the frequency domain scheduling information for each cell and generate DCI to achieve scheduling for each cell.

The number of bits occupied by the j-th FDRA field is determined according to the mechanism in communication protocol 38.212 [2], i.e., based on the resource allocation type ('type 0', 'type 1', 'dynamic') indicated by the high-layer configuration signaling for the j-th cell, the bits occupied by the j-th FDRA field and the corresponding relationship between the value indicated by the FDRA field and the frequency domain resource are determined.

For example, for the first to n-th cells, taking the ZP CSI-RS trigger field and the separate indication manner as an example, n ZP CSI-RS trigger fields can be set in DCI, and the predefined rule can stipulate that the j-th information field in the n information fields is associated with the j-th cell in the n cells, where the cell ID of the j-th cell can be *kⱼ.* In this embodiment, the terminal can determine that the first ZP CSI-RS trigger field indicates the ZP CSI-RS trigger information for the first cell (cell *k*₁), the second ZP CSI-RS trigger field indicates the ZP CSI-RS trigger information for the second cell (cell *k*₂), ..., the j-th ZP CSI-RS trigger field indicates the ZP CSI-RS trigger information for the j-th cell (cell *kⱼ*), ..., and the n-th ZP CSI-RS trigger field indicates the ZP CSI-RS trigger information for the n-th cell (cell *kₙ*), such that based on multiple cells being scheduled through one DCI, the network device can accurately determine the ZP CSI-RS trigger information for each cell, and generate DCI, to implement scheduling each cell.

The number of bits occupied by the j-th ZP CSI-RS trigger field is determined according to the mechanism in communication protocol 38.212 [2], i.e., based on the ZP CSI-RS resource set number n_{ZP} of the high-layer configuration for the j-th cell, the number of bits occupied by the j-th ZP CSI-RS trigger field is determined.

For example, for the first to n-th cells, taking the BWP indicator field and the separate indication manner as an example, n BWP indicator fields can be set in DCI, and the predefined rule can stipulate that the j-th information field in the n information fields is associated with the j-th cell in the n cells, where the cell ID of the j-th cell can be *kⱼ.* In this embodiment, the terminal can determine that the first BWP indicator field indicates the BWP information for the first cell (cell *k*₁), the second BWP indicator field indicates the BWP information for the second cell (cell *k*₂), ..., the j-th BWP indicator field indicates the BWP information for the j-th cell (cell *kⱼ*), ..., and the n-th BWP indicator field indicates the BWP information for the n-th cell (cell *kₙ*). Based on multiple cells being scheduled through one DCI, the network device can accurately determine the BWP information for each cell and generate DCI to achieve scheduling for each cell.

The number of bits occupied by the j-th BWP field is determined according to the mechanism in communication protocol 38.212 [2], that is, based on BWP number n_{BWP,RRC} of the high-layer configuration for the j-th cell, the number of bits occupied by the j-th BWP field is determined.

The order of multiple information fields can be determined from front to back according to the order of bits occupied by multiple information fields, that is, the bits occupied by the j-th information field is before the bits occupied by the (j+1)-th information field. How to determine the order of multiple cells will be explained in the subsequent embodiments.

It should be noted that for multiple information fields of the same type, the number of bits corresponding to each information field can be the same, different, or 0, which can be specifically determined according to the mechanism in communication protocol 38.212 [2], and will not be repeated herein.

Taking 4 information fields of the same type occupying 8 bits as an example, if the number of bits corresponding to each information field is different, it can be that the first information field corresponds to the first and second bits (i.e., bit index 1, ..., and *x*_{*k*₀} corresponding to 2 bits), the second information field corresponds to the third to fifth bits (i.e., bit index *x*_{*k*₀} ⁺¹, ..., and *x*_{*k*₁} corresponding to 3 bits), the third information field corresponds to the sixth and seventh bits (i.e., bit index *x*_{*k*₁}⁺¹, ..., and *x*_{*k*₂} corresponding to 2 bits), and the fourth information field corresponds to the eighth bit (i.e., *x*_{*k*₂}*+*1, ..., and *x*_{*k*₃} corresponding to 1 bit). If the number of bits corresponding to each information field is the same, the first information field can correspond to the first and second bits, the second information field can correspond to the third and fourth bits, the third information field can correspond to the fifth and sixth bits, and the fourth information field can correspond to the seventh and eighth bits, that is, each information field can correspond to two bits (i.e., bit index *x*_{*kj*₋₁}, ..., and *x_{kⱼ}* corresponding to two bits).

The following embodiments illustrate how the order of multiple cells is determined, where the predefined rule stipulates the associating relationship between the information field and the cell where the terminal receives the DCI and other cells according to the same rules.

In an embodiment, the predefined rule stipulates that the identity of the j-th cell is less than the identity of the (j+1)-th cell, i.e., *kⱼ* is less than *k*_{*j*+1}; alternatively, the predefined rule stipulates that the identity of the j-th cell is greater than the identity of the (j+1)-th cell, i.e., *kⱼ* is greater than *k*_{*j+*1}*.*

In an embodiment, regarding the identity (such as Cell ID) of the scheduled cell, the network device can indicate the identity of the scheduled cell to the terminal through RRC signaling, e.g., through information elements such as ServcellIndex and/or SCellIndex in RRC signaling. If the identity of the cell corresponds to PCI, the identity of the scheduled cell can be indicated by the information element PhysCellId in RRC signaling. Of course, the terminal can also determine based on other signaling. Alternatively, the identity of the scheduled cell can be determined in other ways, such as by a predefined rule.

The predefined rule can stipulate that the cells are ordered according to identities of the cells, for example, the cells can be ordered from small to large according to their identities. If the identity of the j-th cell is less than the identity of the (j+1)-th cell. Alternatively, can the cells can be ordered from large to small according to their identities, and then the identity of the j-th cell is greater than the identity of the (j+1)-th cell.

For example, taking four cells as an example, namely cell #1 with identity 1, cell #2 with identity 2, cell #3 with identity 3, and cell #4 with identity 4. If ordered from small to large according to the identities, *kⱼ* is less than *k*_{*j*+1}, and therefore it can be determined that the first cell is cell #1, the second cell is cell #2, the third cell is cell #3, and the fourth cell is cell #4. If ordered in from large to small according to the identities, *kⱼ* is greater than *k*_{*j*+1}, and therefore it can be determined that the first cell is cell #4, the second cell is cell #3, the third cell is cell #2, and the fourth cell is cell #1.

Based on this, the ordering of the cells can be accurately determined according to their identities, and it can be determined which specific cell is scheduled for the j-th information field.

In an embodiment, the predefined rule stipulates that the center frequency of the j-th cell is less than the center frequency of the (j+1)-th cell; alternatively, the predefined rule stipulates that the center frequency of the j-th cell is greater than the center frequency of the (j+1)-th cell.

Regarding the center frequency of the cell, the network device indicates the center frequency of the cell by transmitting SSB to the terminal. Of course, the terminal can also determine in other ways, such as by the predefined rule.

The predefined rule can stipulate that the cells are ordered according to their center frequencies. For example, the cells can be ordered from small to large according to their center frequencies, such that the center frequency of the j-th cell is less than the center frequency of the (j+1)-th cell. Alternatively, the cells can be ordered from large to small according to their center frequencies, such that the center frequency of the j-th cell is greater than the center frequency of the (j+1)-th cell.

For example, taking four cells as an example, the center frequency of cell #1 is f1, the center frequency of cell #2 is f2, the center frequency of cell #3 is f3, and the center frequency of cell #4 is f4, where f1>f2>f3>f4. If the cells are ordered from small to large according to their center frequencies, the first cell is cell #4, the second cell is cell #3, the third cell is cell #2, and the fourth cell is cell #1. If the cells are ordered from large to small according to their center frequencies, the first cell is cell #1, the second cell is cell #2, the third cell is cell #3, and the fourth cell is cell #4.

Based on this, the ordering of the cells can be accurately determined according to their center frequencies, and it can be determined which specific cell is scheduled for the j-th information field.

In an embodiment, the predefined rule stipulates that the absolute radio frequency channel number (ARFCN) corresponding to the center frequency of the j-th cell is less than the ARFCN corresponding to the center frequency of the (j+1)-th cell; alternatively, the predefined rule stipulates that the ARFCN corresponding to the center frequency of the j-th cell is greater than the ARFCN corresponding to the center frequency of the (j+1)-th cell.

Regarding the ARFCN of the cell, the network device can determine the ARFCN of the cell based on the center frequency of the cell or in other ways.

The predefined rule can stipulate that the cells are ordered according to their ARFCNs, for example, the cells can be ordered from small to large according to ARFCN, such that the ARFCN of the j-th cell is less than the ARFCN of the (j+1)-th cell, or can the cells can be ordered from large to small according to ARFCN, such that the ARFCN of the j-th cell is greater than the ARFCN of the (j+1)-th cell.

For example, taking four cells as an example, the ARFCN of cell #1 is ARFCN #1, the ARFCN of cell #2 is ARFCN #2, the ARFCN of cell #3 is ARFCN #3, and the ARFCN of cell #4 is ARFCN #4, where ARFCN #1 > ARFCN #2 > ARFCN #3 > ARFCN #4. If the cells are ordered from small to large according to ARFCNs, the first cell is cell #4, the second cell is cell #3, the third cell is cell #2, and the fourth cell is cell #1. If the cells are ordered from small to large according to ARFCNs, the first cell is cell #1, the second cell is cell #2, the third cell is cell #3, and the fourth cell is cell #4.

Based on this, the ordering of the cells can be accurately determined according to their ARFCNs, and it can be determined which specific cell is scheduled for the j-th information field.

In an embodiment, the multiple information fields include n information fields, and the multiple cells include the cell where the terminal receives the DCI and n-1 other cells. The predefined rule stipulates that the first information field in the n information fields is associated with the cell where the terminal receives the DCI, and the i-th information field in the second to n-th information fields is associated with the (i-1)-th other cell in the n-1 other cells, where 2 ≤ i ≤ n.

The multiple cells can include the cell where the terminal receives the DCI and other cells (except the cell where the terminal receives the DCI), or the scheduled cells can not include the cell where the terminal receives the DCI and only include other cells. In this embodiment, the predefined rule can stipulate the associating relationship between the cells and the information fields when distinguishing between the cell where the terminal receives the DCI and other cells. The associating relationships between information fields and the cell where the terminal receives the DCI and other cells can be stipulated according to different rules.

Taking n cells as an example, if the n cells include the cell where the terminal receives the DCI and n-1 other cells, For a certain type of information field, n information fields can be set to schedule the n cells. The associating relationship can be that the first information field in the n information fields is associated with the cell where the terminal receives the DCI, and the i-th information field in the second to the n-th information fields is associated with the (i-1)-th other cell in the n-1 other cells. That is, for the n-1 other cells, the associating relationship between cells and information fields is defined according to the same rules, and the cell where the terminal receives the DCI is defined to be associated with the first information field.

Based on this, the network device can determine that the scheduling information indicated by the value of the first information field is the scheduling information for the cell where the terminal receives the DCI. From the second information field to the n-th information field, the scheduling information indicated by the value of the i-th information field is the scheduling information for the (i-1)-th other cell. Therefore, based on multiple cells being scheduled through one DCI, the scheduling information for each cell can be accurately determined. The number of bits occupied by the i-th information field and the specific indication method are the same as the method for the single DCI scheduling single cell.

For example, for the n cells from the first cell to the n-th cell, if the n cells include the cell where the terminal receives the DCI and n-1 other cells, taking the FDRA field and the separate indication manner as an example, n FDRA fields can be set in the DCI. The predefined rule can stipulate that the first FDRA field in the n FDRA fields is associated with the cell where the terminal receives the DCI, and the i-th information field in the n-1 FDRA fields from the second to n-th FDRA fields is associated with the (i-1)-th other cell. If the cell ID of the cell where the terminal receives the DCI is not between *k*₁ and *k*_{*n*-1}, then the cell ID of the (i-1)-th cell can be *k*_{*i*-1}.

In this embodiment, the terminal can determine that the first FDRA field indicates the frequency domain scheduling information for the cell where the terminal receives the DCI. In the n-1 FDRA fields from the second to n-th FDRA fields, the second FDRA field indicates the frequency domain scheduling information for the first other cell (cell *k*₁), ..., the i-th FDRA field indicates the frequency domain scheduling information for the (i-1)-th other cell (cell *k*_{*i*-1}), ..., and the n-th FDRA field indicates the frequency domain scheduling information for the (n-1)-th other cell (cell *k*_{*n*-1}). Based on multiple cells being scheduled through one DCI, the network device can accurately acquire the cell corresponding to each FDRA field indicated by DCI.

The number of bits occupied by the i-th FDRA field is determined according to the mechanism in communication protocol 38.212 [2], i.e., based on the resource allocation type ('type 0', 'type 1', 'dynamic') indicated by the high-layer configuration signaling for the i-th cell, the bits occupied by the i-th FDRA field and the corresponding relationship between the value indicated by the FDRA field and the frequency domain resource are determined.

For example, for the n cells from the first cell to the n-th cell, if the n cells include the cell where the terminal receives the DCI and n-1 other cells, taking the ZP CSI-RS trigger field and the separate indication manner as an example, n ZP CSI-RS trigger fields can be set in the DCI. The predefined rule can stipulate that the first ZP CSI-RS trigger field in the n ZP CSI-RS trigger fields is associated with the cell where the terminal receives the DCI, and the i-th information field in the n-1 ZP CSI-RS trigger fields from the second to n-th ZP CSI-RS trigger fields is associated with the (i-1)-th other cell. If the cell ID of the cell where the terminal receives the DCI is not between *k*₁ and *k*_{*n*-1}, then the cell ID of the (i-1)-th cell can be *k*_{*i*-1}.

In this embodiment, the terminal can determine that the first ZP CSI-RS trigger field indicates the ZP CSI-RS trigger information for the cell where the terminal receives the DCI. In the n-1 ZP CSI-RS trigger fields from the second to n-th BWP indicator fields, the second ZP CSI-RS trigger field indicates the ZP CSI-RS trigger information for the first other cell (cell *k*₁), ..., the i-th ZP CSI-RS trigger field indicates the ZP CSI-RS trigger for the (i-1)-th other cell (cell *k*_{*i*-1}), ..., and the n-th ZP CSI-RS trigger field indicates the ZP CSI-RS trigger for the (n-1)-th other cell (cell *k*_{*n*-1}). Based on multiple cells being scheduled through one DCI, the network device can accurately acquire the cell corresponding to each ZP CSI-RS trigger field indicated by the DCI.

The number of bits occupied by the i-th ZP CSI-RS trigger field is determined according to the mechanism in communication protocol 38.212 [2], i.e., based on the ZP CSI-RS resource set number n_{ZP} of the high-layer configuration for the i-th cell, the number of bits occupied by the i-th ZP CSI-RS trigger field is determined.

For example, for the n cells from the first cell to the n-th cell, if the n cells include the cell where the terminal receives the DCI and n-1 other cells, taking the BWP indicator field and the separate indication manner as an example, n BWP indicator fields can be set in the DCI. The predefined rule can stipulate that the first BWP indicator field in the n BWP indicator fields is associated with the cell where the terminal receives the DCI, and the i-th information field in the n-1 BWP indicator fields from the second to n-th BWP indicator fields is associated with the (i-1)-th other cell. If the cell ID of the cell where the terminal receives the DCI is not between *k*₁ and *k*_{*n*-1}, then the cell ID of the (i-1)-th cell can be *k*_{*i-*1}.

In this embodiment, the terminal can determine that the first BWP indicator field indicates the BWP information for the cell where the terminal receives the DCI. In the n-1 BWP indicator fields from the second to n-th BWP indicator fields, the second BWP indicator field indicates the BWP information for the first other cell (cell *k*₁), ..., the i-th BWP indicator field indicates the BWP information for the (i-1)-th other cell (cell *k*_{*i*-1}), ..., and the n-th BWP indicator field indicates the BWP information for the (n-1)-th other cell (cell *k*_{*n*-1}). Based on multiple cells being scheduled through one DCI, the network device can accurately acquire the cell corresponding to each BWP indicator field indicated by the DCI.

The number of bits occupied by the i-th BWP field is determined according to the mechanism in communication protocol 38.212 [2], that is, based on BWP number n_{BWP,RRC} of the high-layer configuration for the i-th cell, the number of bits occupied by the i-th BWP field is determined.

The order of multiple information fields can be determined from front to back according to the order of bits occupied by multiple information fields, that is, the bits occupied by the (i-1)-th information field is before the bits occupied by the i-th information field. How to determine the order of multiple cells will be explained in the subsequent embodiments.

The following embodiments illustrate how the order of multiple cells is determined, where the predefined rule stipulates the associating relationship between the information field and the cell where the terminal receives the DCI and other cells according to different rules.

In an embodiment, the predefined rule stipulates that the identity of the (i-1)-th other cell is less than the identity of the i-th other cell; alternatively, the predefined rule stipulates that the identity of the (i-1)-th other cell is greater than the identity of the i-th other cell.

In an embodiment, regarding the identity (such as Cell ID) of the scheduled cell, the network device can indicate the identity of the scheduled cell to the terminal through RRC signaling, e.g., through information elements such as ServcellIndex and/or SCellIndex in RRC signaling. If the identity of the cell corresponds to PCI, the identity of the scheduled cell can be indicated by the information element PhysCellId in RRC signaling. Of course, the identity of the scheduled cell can also be determined based on other method, such as by predefined rules.

The predefined rule can stipulate that the scheduled cells are ordered according to their identities, for example, the scheduled cells can be ordered from small to large according to their identities. Then, the cell where the terminal receives the DCI is the first cell, and the identity of the (i-1)-th other cell is smaller than the identity of the i-th other cell. If the cell ID of the cell where the terminal receives the DCI is not between *k*₁ and *k*_{*n*-1}, *k*_{*i*-1} is less than *kᵢ*. Alternatively, if the scheduled cells are ordered from large to small according to their identities, the cell where the terminal receives the DCI is the first cell, and the identity of the (i-1)-th other cell is greater than the identity of the i-th other cell. If the cell ID of the cell where the terminal receives the DCI is not between *k*₁ and *k*_{*n*-1}, *k*_{*i*-1} is greater than *kᵢ*.

For example, taking four cells as examples, namely cell #1 with identity 1, cell #2 with identity 2, cell #3 with identity 3, and cell #4 with identity 4, where cell #3 is the cell where the terminal receives the DCI, If the cells are ordered from small to large according to the identities, the first cell is cell #3, and for other cells except cell #3, *k*_{*i*-1} is less than *kᵢ*, the second cell is cell #1, the third cell is cell #2, and the fourth cell is cell #4. If the cells are ordered from large to small according to the identities, the first cell is cell #3, and for other cells except cell #3, *k*_{*i*-1} is greater than *kᵢ*, the second cell is cell #4, the third cell is cell #2, and the fourth cell is cell #1.

Based on this, the ordering of the cells can be accurately determined according to their identities, and it can be determined which specific cell is scheduled for the i-th information field.

In an embodiment, the predefined rule stipulates that the center frequency of the (i-1)-th other cell is less than the center frequency of the i-th other cell; alternatively, the predefined rule stipulates that the center frequency of the (i-1)-th other cell is greater than the center frequency of the i-th other cell.

Regarding the center frequency of the cell, the network device indicates the center frequency of the cell by transmitting SSB to the terminal. Of course, the terminal can also determine in other ways, such as by the predefined rule.

The predefined rule can stipulate that the cells are ordered according to their center frequencies. For example, the cells can be ordered from small to large according to their center frequencies. Therefore, the cell where the terminal receives the DCI is the first cell, and the center frequency of the (i-1)-th other cell is lower than the center frequency of the i-th other cell. Alternatively, if the cells are ordered from large to small according to their center frequencies, the cell where the terminal is located is the first cell, and the center frequency of the (i-1)-th other cell is greater than the center frequency of the i-th other cell.

For example, taking four cells as an example, the center frequency of cell #1 is f1, the center frequency of cell #2 is f2, the center frequency of cell #3 is f3, and the center frequency of cell #4 is f4, where f1>f2>f3>f4, and cell #3 is the cell where the terminal receives the DCI. If the cells are ordered from small to large according to their center frequencies, the first cell is cell #3, the second cell is cell #4, the third cell is cell #2, and the fourth cell is cell #1. If the cells are ordered from large to small according to their center frequencies, the first cell is cell #3, the second cell is cell #1, the third cell is cell #2, and the fourth cell is cell #4.

Based on this, the ordering of the cells can be accurately determined according to their center frequencies, and it can be determined which specific cell is scheduled for the i-th information field.

In an embodiment, the predefined rule stipulates that the absolute radio frequency channel number ARFCN corresponding to the center frequency of the (i-1)-th other cell is less than the ARFCN corresponding to the center frequency of the i-th other cell; and alternatively, the predefined rule stipulates that the ARFCN corresponding to the center frequency of the (i-1)-th other cell is greater than the ARFCN corresponding to the center frequency of the i-th other cell.

Corresponding to the embodiments of the scheduling information determining method and the downlink control information transmitting method described above. The present disclosure further provides embodiments of a scheduling information determining apparatus and a downlink control information transmitting apparatus.

FIG. 3 is a schematic block diagram of a scheduling information determining apparatus according to an embodiment in the present disclosure. The scheduling information determining apparatus shown in the embodiments can be applied to a terminal. The terminal includes but is not limited to a communication device such as a mobile phone, a tablet, a wearable device, a sensor, or an Internet of Things (IoT) device. The terminal can communicate with a network device. The network device includes but not limited to a network device (such as a base station, a core network, etc.) in a communication system such as a 4G communication system, a 5G communication system, or a 6G communication system, etc.

As shown in FIG. 3, the scheduling information determining apparatus may include:
a receiving module 301, configured to receive downlink control information (DCI) for scheduling a plurality of cells transmitted by a network device; and
a processing module 302, configured to determine an associating relationship between a plurality of information fields of a same type in the DCI and the plurality of cells; and determine scheduling information for each of the plurality of cells based on a value of each of the plurality of information fields and the associating relationship.

In an embodiment, the multiple cells in the associating relationship are multiple cells in a cell set, where the cell set includes at least one of : a cell set composed of cells that can be scheduled by the DCI; or a sell set composed of cells with the same configuration parameters.

In an embodiment, the processing module is further configured to determine the cell set based on a predefined rule and/or signaling transmitted by the network device.

In an embodiment, a cell in the cell set includes at least one of: a scheduling cell; or a scheduled cell.

In an embodiment, the number of the plurality of information fields in the associating relationship is equal to a maximum number of cells that the DCI is able to schedule.

In an embodiment, the processing module is configured to determine the associating relationship based on the predefined rule.

In an embodiment, the multiple information fields include n information fields, and the multiple cells include n cells. The predefined rule stipulates that the j-th information field in the n information fields is associated with the j-th cell in the n cells, where 1 ≤ j ≤ n.

In an embodiment, the predefined rule stipulates that the identity of the j-th cell is less than the identity of the (j+1)-th cell; alternatively, the predefined rule stipulates that the identity of the j-th cell is greater than the identity of the (j+1)-th cell.

In an embodiment, the predefined rule stipulates that the center frequency of the j-th cell is less than the center frequency of the (j+1)-th cell; alternatively, the predefined rule stipulates that the center frequency of the j-th cell is greater than the center frequency of the (j+1)-th cell.

In an embodiment, the predefined rule stipulates that the absolute radio frequency channel number (ARFCN) corresponding to the center frequency of the j-th cell is less than the ARFCN corresponding to the center frequency of the (j+1)-th cell; alternatively, the predefined rule stipulates that the ARFCN corresponding to the center frequency of the j-th cell is greater than the ARFCN corresponding to the center frequency of the (j+1)-th cell.

In an embodiment, the multiple information fields include n information fields, and the multiple cells include the cell where the terminal receives the DCI and n-1 other cells. The predefined rule stipulates that the first information field in the n information fields is associated with the cell where the terminal receives the DCI, and the i-th information field in the second to n-th information fields is associated with the i-th other cell in the n other cells, where 2 ≤ i ≤ n.

In an embodiment, the predefined rule stipulates that the identity of the (i-1)-th other cell is less than the identity of the i-th other cell; alternatively, the predefined rule stipulates that the identity of the (i-1)-th other cell is greater than the identity of the i-th other cell.

In an embodiment, the predefined rule stipulates that the center frequency of the (i-1)-th other cell is less than the center frequency of the i-th other cell; alternatively, the predefined rule stipulates that the center frequency of the (i-1)-th other cell is greater than the center frequency of the i-th other cell.

In an embodiment, the predefined rule stipulates that the absolute radio frequency channel number ARFCN corresponding to the center frequency of the (i-1)-th other cell is less than the ARFCN corresponding to the center frequency of the i-th other cell; and alternatively, the predefined rule stipulates that the ARFCN corresponding to the center frequency of the (i-1)-th other cell is greater than the ARFCN corresponding to the center frequency of the i-th other cell.

In an embodiment, the processing module is configured to determine the associating relationship based on the indication from the network device.

FIG. 4 is a schematic block diagram of a downlink control information transmitting apparatus according to an embodiment in the present disclosure. The downlink control information transmitting apparatus shown in the embodiments can be performed by a network device, where the network device can communicate with a terminal. The network device include but is not limited to a base station in a communication system such as a 4G base station, a 5G base station, or a 6G base station, etc. The terminal includes but is not limited to a communication device such as a mobile phone, a tablet, a wearable device, a sensor, or an Internet of Things (IoT) device.

As shown in FIG. 4, the downlink control information transmitting apparatus may include:
a processing module 401, configured to determine an associating relationship between a plurality of information fields of a same type in downlink control information (DCI) used for scheduling a plurality of cells and a plurality of cells; and generate DCI based on the associating relationship; and
a transmitting module 402, configured to transmit the generated DCI to the terminal.

In an embodiment, the multiple cells in the associating relationship are multiple cells in a cell set, where the cell set includes at least one of : a cell set composed of cells that can be scheduled by the DCI; or a sell set composed of cells with the same configuration parameters.

In an embodiment, the transmitting module is further configured to transmit signaling to the terminal to indicate the cell set, or the processing module is further configured to determine the cell set according to a predefined rule.

In an embodiment, a cell in the cell set includes at least one of: a scheduling cell; or a scheduled cell.

In an embodiment, the number of the plurality of information fields in the associating relationship is equal to a maximum number of cells that the DCI is able to schedule.

In an embodiment, the processing module is configured to determine the associating relationship based on the predefined rule.

In an embodiment, the multiple information fields include n information fields, and the multiple cells include n cells. The predefined rule stipulates that the j-th information field in the n information fields is associated with the j-th cell in the n cells, where 1 ≤ j ≤ n.

In an embodiment, the predefined rule stipulates that the identity of the j-th cell is less than the identity of the (j+1)-th cell; alternatively, the predefined rule stipulates that the identity of the j-th cell is greater than the identity of the (j+1)-th cell.

In an embodiment, the predefined rule stipulates that the center frequency of the j-th cell is less than the center frequency of the (j+1)-th cell; alternatively, the predefined rule stipulates that the center frequency of the j-th cell is greater than the center frequency of the (j+1)-th cell.

In an embodiment, the predefined rule stipulates that the absolute radio frequency channel number (ARFCN) corresponding to the center frequency of the j-th cell is less than the ARFCN corresponding to the center frequency of the (j+1)-th cell; alternatively, the predefined rule stipulates that the ARFCN corresponding to the center frequency of the j-th cell is greater than the ARFCN corresponding to the center frequency of the (j+1)-th cell.

In an embodiment, the multiple information fields include n information fields, and the multiple cells include the cell where the terminal receives the DCI and n-1 other cells. The predefined rule stipulates that the first information field in the n information fields is associated with the cell where the terminal receives the DCI, and the i-th information field in the second to n-th information fields is associated with the i-th other cell in the n other cells, where 2 ≤ i ≤ n.

In an embodiment, the predefined rule stipulates that the identity of the (i-1)-th other cell is less than the identity of the i-th other cell; alternatively, the predefined rule stipulates that the identity of the (i-1)-th other cell is greater than the identity of the i-th other cell.

In an embodiment, the predefined rule stipulates that the center frequency of the (i-1)-th other cell is less than the center frequency of the i-th other cell; alternatively, the predefined rule stipulates that the center frequency of the (i-1)-th other cell is greater than the center frequency of the i-th other cell.

In an embodiment, the predefined rule stipulates that the absolute radio frequency channel number ARFCN corresponding to the center frequency of the (i-1)-th other cell is less than the ARFCN corresponding to the center frequency of the i-th other cell; and alternatively, the predefined rule stipulates that the ARFCN corresponding to the center frequency of the (i-1)-th other cell is greater than the ARFCN corresponding to the center frequency of the i-th other cell.

In an embodiment, the processing module is configured to determine the associating relationship based on the implementation of the network device; where the transmitting module is further configured to indicate the associating relationship to the terminal.

With regard to the device in the above examples, the specific manner in which the respective modules perform the operations has been described in detail in the examples of the related methods, and will not be explained in detail herein.

Since the device embodiments basically correspond to the method embodiments, the relevant parts can refer to the partial description of the method embodiments. The device examples described above are merely illustrative, where the modules described as separate members may be or not be physically separated, and the members displayed as modules may be or not be physical units, i.e., may be located in one place, or may be distributed in a plurality of network modules. Part or all of the modules may be selected according to actual requirements to implement the objectives of the solutions in the examples. A person skilled in the art can understand and implement without creative work.

The embodiments of the present disclosure further provide a communication device, including: one or more processors; and one or more memories for storing a computer programs; where when the computer program is executed by the one or more processors, the scheduling information determining method according to any one of embodiments mentioned above is implemented.

The embodiments of the present disclosure further provide a communication device, including: one or more processors; and one or more memories for storing a computer programs; where when the computer program is executed by the one or more processors, the downlink control information transmitting method according to any one of the above embodiments is implemented.

The embodiments of the present disclosure further provide a computer-readable storage medium for storing a computer program is provided, where when the computer program is executed by one or more processors, the scheduling information determining method according to any one of embodiments mentioned above is implemented.

The embodiments of the present disclosure further provide a computer-readable storage medium for storing a computer program, where when the computer program is executed by one or more processors, the downlink control information transmitting method according to any one of the above embodiments is implemented.

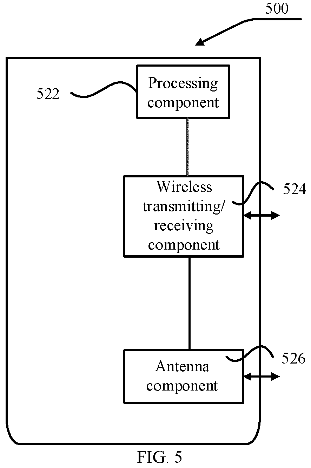

As shown in FIG. 5, FIG. 5 is a schematic block diagram of a device 500 for transmitting downlink control information according to embodiments of the present disclosure. The device 500 may be provided as a base station. Referring to FIG. 5, the device 500 includes a processing component 522, a wireless transmitting/receiving component 524, an antenna component 526, and a signaling processing portion specific to a wireless interface. The processing component 522 may further include one or more processors. One of the processors in processing component 522 can be configured to implement the downlink control information transmitting method described in any one of the above embodiments.

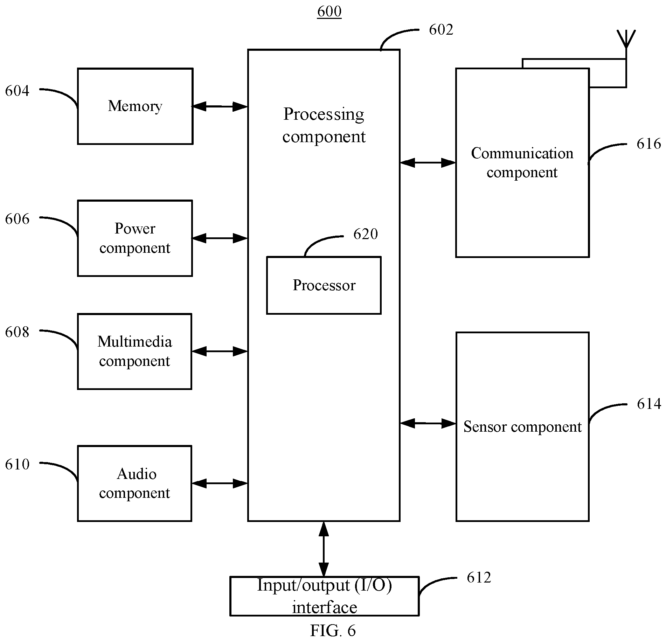

FIG. 6 is a schematic block diagram of a device 600 for determining scheduling information according to an embodiment in the present disclosure. For example, device 600 can be a mobile phone, a computer, a digital broadcast terminal, a message transmitting and receiving device, a gaming console, a tablet device, a medical device, a fitness device, a personal digital assistant, and the like.

Referring to FIG. 6, device 600 can include one or more of the following components: processing component 602, memory 604, power component 606, multimedia component 608, audio component 610, input/output (I/O) interface 612, sensor component 614, or a communication component 616.

The processing component 602 generally controls the overall operations of the electronic device 600, such as operations associated with display, calling, data communication, camera operation and recording operation. The processing assembly 602 may include one or more processors 620 to execute instructions to complete all or a part of the steps of the above scheduling information determining methods. Further, the processing component 602 may include one or more modules to facilitate interaction between the processing component 602 and another component. For example, the processing component 602 may include a multimedia module to facilitate the interaction between the multimedia component 608 and the processing component 602.

The memory 604 is configured to store different types of data to support the operations of the electronic device 600. Examples of such data include instructions of any application program or method operable on the electronic device 600, contact data, telephone directory data, messages, pictures, videos, and the like. The memory 604 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a disk or a CD.

The power supply component 606 provides power for different components of the electronic device 600. The power supply component 606 may include a power management system, one or more power sources, and other components associated with generating, managing and distributing power for the electronic device 600.

The multimedia component 608 may include a screen for providing an output interface between the electronic device 600 and a user. In some examples, the screen may include a Liquid Crystal Display (LCD) and a Touch Panel (TP). If the screen includes a touch panel, the screen may be implemented as a touch screen for receiving an input signaling from a user. The touch panel may include one or more touch sensors for sensing a touch, a slide and a gesture on the touch panel. The touch sensor may not only sense a boundary of a touching or sliding movement, but also detect duration and pressure related to the touching or sliding operation. In some examples, the multimedia component 608 may include a front camera and/or a rear camera. When the device 600 is in an operation mode, such as a shooting mode or a video mode, the front camera and/or the rear camera can receive external multimedia data. Each of the front camera and the rear camera may be a fixed optical lens system or be of a focal length and a capability of an optical zoom.

The audio component 610 is configured to output and/or input an audio signaling. For example, the audio component 610 may include a microphone (MIC). When the electronic device 600 is in an operating mode, such as a call mode, a recording mode and a speech recognition mode, the microphone is configured to receive an external audio signal. The received audio signaling may be further stored in the memory 604 or transmitted via the communication component 616. In some examples, the audio component 610 also includes a loudspeaker for outputting an audio signaling.

The I/O interface 612 provides an interface between the processing component 602 and a peripheral interface module which may be a keyboard, a click wheel, a button, or the like. These buttons may include but are not limited to, a home button, a volume button, a start button and a lock button.

The sensor component 614 may include one or more sensors for providing state assessments in different aspects for the electronic device 600. For example, sensor component 614 can detect an open/closed state of device 600, a relative positioning of components, such as the display and keypad of device 600, and sensor component 614 can also detect a change in position of device 600 or a component of device 600, the existence or absence of user contact with device 600, orientation or acceleration/deceleration of device 600, and temperature change of device 600. The sensor component 614 may include a proximity sensor for detecting the existence of a nearby object without any physical touch. The sensor component 614 may also include an optical sensor, such as a CMOS or CCD image sensor used in an imaging application. In some examples, the sensor component 614 may also include an acceleration sensor, a gyro sensor, a magnetic sensor, a pressure sensor, or a temperature sensor.

The communication component 616 is configured to facilitate wired or wireless communication between the electronic device 600 and other devices. The device 600 may access a wireless network according to a communication standard, such as WiFi, 2G, 3G, 4G LTE, 5G NR, or a combination thereof. In some embodiments, the communication component 616 may receive a broadcast signaling or broadcast-related information from an external broadcast management system via a broadcast channel. In an example, the communication component 616 may also include a Near Field Communication (NFC) module to facilitate short-range communications. For example, the NFC module may be implemented based on a radio frequency identification (RFID) technology, an infrared data association (IrDA) technology, an ultra wide band (UWB) technology, a Bluetooth (BT) technology, and other technologies.

In an example, the apparatus 600 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components for performing the scheduling information determining method described above.

In an example, a non-transitory computer readable storage medium including instructions, such as the memory 604 including instructions, is also provided. The above instructions may be executed by the processor 620 of the apparatus 600 to complete the above scheduling information determining method. For example, the non-transitory computer-readable storage medium may be a ROM, a RAM, a CD-ROM, a magnetic tape, a floppy disc, an optical data storage device, and the like.

After considering and practicing the disclosure of the specification, other embodiments of the present disclosure will be readily apparent to those skilled in the art. The present disclosure is intended to cover any modification, use or adaptation of the present disclosure. These modifications, uses or adaptations follow the general principles of the present disclosure and include common knowledge and conventional technical means in the technical field that are not disclosed in the present disclosure. The specification and embodiments herein are intended to be illustrative only and the real scope and spirit of the present disclosure are indicated by the following claims of the present disclosure.

It is to be understood that the present disclosure is not limited to the precise structures described above and shown in the accompanying drawings and may be modified or changed without departing from the scope of the present disclosure. The scope of protection of the present disclosure is limited only by the appended claims.

It is to be noted that the relational terms such as "first" and "second" used herein are merely intended to distinguish one entity or operation from another entity or operation rather than to require or imply any such actual relation or order existing between these entities or operations. The term "including", "containing" or any variation thereof is intended to encompass non-exclusive inclusion, so that a process, method, article or device including a series of elements includes not only those elements but also other elements not listed explicitly or those elements inherent to such a process, method, article or device. Without further limitation, the element defined by the statement "including a ......" do not preclude the existence of additional identical elements in the process, method, article, or device that include the element.

The above provides a detailed introduction to the methods and apparatuses provided in the embodiments of the present disclosure. Specific examples are applied in the present disclosure to explain the principles and embodiments of the present disclosure. The explanations of the above embodiments are only used to help understand the methods and core ideas of the present disclosure. Meanwhile, for those skilled in the art, based on the idea of the present disclosure, there will be changes in the embodiments and application scopes. In summary, the content of the specification should not be construed as limiting the present disclosure.

## Claims

1. A scheduling information determining method, performed by a terminal, comprising:
receiving downlink control information (DCI) for scheduling a plurality of cells transmitted by a network device;
determining an associating relationship between a plurality of information fields of a same type in the DCI and the plurality of cells; and
determining scheduling information for each of the plurality of cells based on a value of each of the plurality of information fields and the associating relationship.

2. The method according to claim 1, wherein the plurality of cells in the associating relationship are in a cell set, wherein the cell set comprises at least one of:
a cell set composed of cells that is able to be scheduled by the DCI; or
a cell set composed of cells with same configuration parameters.

3. The method according to claim 2, further comprising:
determining the cell set based on a predefined rule and/or signaling transmitted by the network device.

4. The method according to claim 2, wherein a cell in the cell set comprises at least one of:
a scheduling cell; or
a scheduled cell.

5. The method according to claim 1, wherein a number of the plurality of information fields in the associating relationship is equal to a maximum number of cells that the DCI is able to schedule.

6. The method according to claim 1, wherein determining the associating relationship between the plurality of information fields of the same type in the DCI and the plurality of cells comprises:
determining the associating relationship according to a predefined rule.

7. The method according to claim 6, wherein the plurality of information fields comprise n information fields, and the plurality of cells comprise n cells;
wherein the predefined rule stipulates that a j-th information field in the n information fields is associated with a j-th cell in the n cells, wherein 1 ≤ j ≤ n.

8. The method according to claim 7, wherein
the predefined rule stipulates that an identity of the j-th cell is less than an identity of a (j+1)-th cell; or
the predefined rule stipulates that an identity of the j-th cell is greater than an identity of a (j+1)-th cell.

9. The method according to claim 7, wherein
the predefined rule stipulates that a center frequency of the j-th cell is less than a center frequency of a (j+1)-th cell; or
the predefined rule stipulates that a center frequency of the j-th cell is greater than a center frequency of a (j+1)-th cell.

10. The method according to claim 7, wherein
the predefined rule stipulates that an absolute radio frequency channel number (ARFCN) corresponding to a center frequency of the j-th cell is less than an ARFCN corresponding to a center frequency of a (j+1)-th cell; or
the predefined rule stipulates that an ARFCN corresponding to a center frequency of the j-th cell is greater than an ARFCN corresponding to a center frequency of a (j+1)-th cell.

11. The method according to claim 6, wherein the plurality of information fields comprise n information fields, and the plurality of cells comprise a cell where the terminal receives the DCI and n-1 other cells; and
the predefined rule stipulates that a first information field in the n information fields is associated with the cell where the terminal receives the DCI, and an i-th information field in second to n-th information fields is associated with an (i-1)-th other cell in the n-1 other cells, wherein 2 ≤ i ≤ n.

12. The method according to claim 11, wherein
the predefined rule stipulates that an identity of an (i-1)-th other cell is smaller than an identity of an i-th other cell; or
the predefined rule stipulates that an identity of an (i-1)-th other cell is greater than an identity of an i-th other cell.

13. The method according to claim 11, wherein
the predefined rule stipulates that a center frequency of an (i-1)-th other cell is less than a center frequency of an i-th other cell; or
the predefined rule stipulates that a center frequency of an (i-1)-th other cell is greater than a center frequency of an i-th other cell.

14. The method according to claim 11, wherein
the predefined rule stipulates that an absolute radio frequency channel number (ARFCN) corresponding to a center frequency of an (i-1)-th other cell is less than an ARFCN corresponding to a center frequency of an i-th other cell; or
the predefined rule stipulates that an ARFCN corresponding to a center frequency of an (i-1)-th other cell is greater than an ARFCN corresponding to a center frequency of an i-th other cell.

15. The method according to claim 1, wherein determining the associating relationship between the plurality of information fields of the same type in the DCI and the plurality of cells comprises:
determining the associating relationship based on an instruction from the network device.

16. A downlink control information transmitting method, performed by a network device, comprising:
determining an associating relationship between a plurality of information fields of a same type in downlink control information (DCI) used for scheduling a plurality of cells and the plurality of cells;
generating DCI based on the associating relationship; and
transmitting generated DCI to a terminal.

17. The method according to claim 16, wherein the plurality of cells in the associating relationship are in a cell set, wherein the cell set comprises at least one of:
a cell set composed of cells that is able to be scheduled by the DCI; or
a cell set composed of cells with same configuration parameters.

18. The method according to claim 17, further comprising:
transmitting signaling to the terminal to indicate the cell set, or determining the cell set according to a predefined rule.

19. The method according to claim 17, wherein a cell in the cell set comprises at least one of:
a scheduling cell; or
a scheduled cell.

20. The method according to claim 16, wherein a number of the plurality of information fields in the associating relationship is equal to a maximum number of cells that the DCI is able to schedule.

21. The method according to claim 16, wherein determining the associating relationship between the plurality of information fields of the same type in the downlink control information (DCI) used for scheduling a plurality of cells and the plurality of cells comprises:
determining the associating relationship according to a predefined rule.

22. The method according to claim 21, wherein the plurality of information fields comprise n information fields, and the plurality of cells comprise n cells;
wherein the predefined rule stipulates that a j-th information field in the n information fields is associated with a j-th cell in the n cells, wherein 1 ≤ j ≤ n.

23. The method according to claim 22, wherein
the predefined rule stipulates that an identity of the j-th cell is less than an identity of a (j+1)-th cell; or
the predefined rule stipulates that an identity of the j-th cell is greater than an identity of a (j+1)-th cell.

24. The method according to claim 22, wherein
the predefined rule stipulates that a center frequency of the j-th cell is less than a center frequency of a (j+1)-th cell; or
the predefined rule stipulates that a center frequency of the j-th cell is greater than a center frequency of a (j+1)-th cell.

25. The method according to claim 22, wherein
the predefined rule stipulates that an absolute radio frequency channel number (ARFCN) corresponding to a center frequency of the j-th cell is less than an ARFCN corresponding to a center frequency of a (j+1)-th cell; or
the predefined rule stipulates that an ARFCN corresponding to a center frequency of the j-th cell is greater than an ARFCN corresponding to a center frequency of a (j+1)-th cell.

26. The method according to claim 21, wherein the plurality of information fields comprise n information fields, and the plurality of cells comprise a cell where the terminal receives the DCI and n-1 other cells; and
the predefined rule stipulates that a first information field in the n information fields is associated with the cell where the terminal receives the DCI, and an i-th information field in second to n-th information fields is associated with an (i-1)-th other cell in the n-1 other cells, wherein 2 ≤ i ≤ n.

27. The method according to claim 26, wherein
the predefined rule stipulates that an identity of an (i-1)-th other cell is smaller than an identity of an i-th other cell; or
the predefined rule stipulates that an identity of an (i-1)-th other cell is greater than an identity of an i-th other cell.

28. The method according to claim 26, wherein
the predefined rule stipulates that a center frequency of an (i-1)-th other cell is less than a center frequency of an i-th other cell; or
the predefined rule stipulates that a center frequency of an (i-1)-th other cell is greater than a center frequency of an i-th other cell.

29. The method according to claim 26, wherein
the predefined rule stipulates that an absolute radio frequency channel number (ARFCN) corresponding to a center frequency of an (i-1)-th other cell is less than an ARFCN corresponding to a center frequency of an i-th other cell; or
the predefined rule stipulates that an ARFCN corresponding to a center frequency of an (i-1)-th other cell is greater than an ARFCN corresponding to a center frequency of an i-th other cell.

30. The method according to claim 16, wherein determining the associating relationship between the plurality of information fields of the same type in the downlink control information (DCI) used for scheduling a plurality of cells and the plurality of cells comprises:
determining the associating relationship based on implementation of the network device;
wherein the method further comprises:
indicating the associating relationship to the terminal.

31. A scheduling information determining apparatus, applied to a terminal, comprising:
a receiving module, configured to receive downlink control information (DCI) for scheduling a plurality of cells transmitted by a network device; and
a processing module, configured to determine an associating relationship between a plurality of information fields of a same type in the DCI and the plurality of cells; and determine scheduling information for each of the plurality of cells based on a value of each of the plurality of information fields and the associating relationship.

32. A downlink control information transmitting apparatus, applied to a network device, comprising:
a processing module, configured to determine an associating relationship between a plurality of information fields of a same type in downlink control information (DCI) used for scheduling a plurality of cells and a plurality of cells; and generate DCI based on the associating relationship; and
a transmitting module, configured to transmit generated DCI to a terminal.

33. A communication device, comprising:
one or more processors; and
one or more memories for storing a computer programs;
wherein when the computer program is executed by the one or more processors, the scheduling information determining method according to any one of claims 1 to 15 is implemented.

34. A communication device, comprising:
one or more processors; and
one or more memories for storing a computer programs;
wherein when the computer program is executed by the one or more processors, the downlink control information transmitting method according to any one of claims 16 to 30 is implemented.

35. A computer-readable storage medium for storing a computer program, wherein when the computer program is executed by one or more processors, the scheduling information determining method according to any one of claims 1 to 15 is implemented.

36. A computer-readable storage medium for storing a computer program, wherein when the computer program is executed by one or more processors, the downlink control information transmitting method according to any one of claims 16 to 30 is implemented.
